# EUROPEAN PATENT SPECIFICATION

(11) **EP 1 871 045 B1**
(45) Date of publication and mention of the grant of the patent: **17.12.2008**
(21) Application number: 06012542.4
(22) Date of filing: 19.06.2006
(51) Int. Cl.: H04L 12/56, H04L 12/28

(54) **DETECTING AND BYPASSING MISBEHAVING NODES IN DISTRUSTED AD HOC NETWORKS**
Erkennung und Umgehung von fehlerbehafteten Verbindungsknoten in einem vertrauensunwürdigen Ad-Hoc-Netzwerk
Détection et entournement de noeuds de communication défaillants dans un réseau ad-hoc indigne de confiance

(43) Date of publication of application: 26.12.2007
(73) Proprietor: NTT DoCoMo Inc., Chiyoda-ku Tokyo 100-6150 (JP)
(72) Inventor: Aad, Imad, 80689 München (DE); Prehofer, Christian, 81477 München (DE)
(74) Representative: Zinkler, Franz

(56) References cited:
- EP-A2- 1 045 551
- HONGMEI DENG ET AL: "Routing Security in Wireless Ad Hoc Networks" IEEE COMMUNICATIONS MAGAZINE, IEEE SERVICE CENTER, PISCATAWAY, US, vol. 40, no. 10, October 2002 (2002-10), pages 70-75, XP011092930 ISSN: 0163-6804
- GHOSH T ET AL: "Collaborative Trust-based Secure Routing Against Colluding Malicious Nodes in Multi-hop Ad Hoc Networks" COMPUTATIONAL SYSTEMS BIOINFORMATICS CONFERENCE, 2004. CSB 2004. PROCEEDINGS. 2004 IEEE TAMPA, FL, USA 16-18 NOV. 2004, LOS ALAMITOS, CA, USA,IEEE (COMPUT. SOC, US, 16 November 2004 (2004-11-16), pages 224-231, XP010753158 ISBN: 0-7695-2260-2

## Description

The present invention is in the field of cellular, ad hoc, and multi hop networks, and it addresses the problem of misbehaving ad hoc- and hybrid-, i.e. ad hoc and infrastructure network nodes, which can sensibly disrupt proper network functionality and can cause network failure.

Ad hoc and multi hop networks are considered to be established in future mobile communication systems. They are a promising solution to a major problem that will appear in the future mobile radio communication systems (4G = 4^{th} generation), namely the range or coverage. As higher carrier frequencies or center frequencies can be envisaged for future mobile radio communication systems, where the expected center frequencies range up to 5 to 10 GHz and with the large bandwidth requirements of up to 100 MHz that can be foreseen, a significantly increased path loss and noise power level has to be expected, which translates into a significantly reduced area a base station can cover. Ad hoc or multi hop networks are expected to overcome the problem of range and coverage. Mobile stations in the field will act as mobile relay stations, thereby extending the range of base stations, or even set up an entirely autonomous network among themselves. However, a major problem of ad hoc or multi hop networks occurs if one of its network nodes starts misbehaving. Another problem that can be foreseen is coming along with the security issues that are required in order to provide the full mobile communication service. Ad hoc networks will be easier to attack, since an operator cannot keep control of all mobile ad hoc nodes, respectively, relay stations.

One popular scenario of a misbehaving network node that is also discussed in literature is the so-called black hole.

Several types of black hole attacks exist in the literature, distinguished by the misbehaving concept, implementation details, whether they attack the network in a control plane, where control information is exchanged between network nodes in order to keep up the network, or in the user plane, where the actual application or user data is exchanged in the network. One phase during an ad hoc or multi hop network set up is the so-called route set up phase. During this phase, the network nodes exchange routing information, i.e. they exchange information to learn about their adjacent network nodes in order to establish routes through the network. This phase is also called the route establishment phase where the network is actually set up and formed. Another phase in ad hoc or multi hop networks is the so-called data-forwarding or routing phase. This is the scenario where user data is transmitted through the network, going along a route that was established during the route establishment phase, being transmitted from network node to network node along the network route.

Hongmei Deng, Wei Li, and Dharma P. Agrawal did an analysis on routing security in "Routing Security in Wireless Ad Hoc Networks", IEEE Communications Magazine, in October 2002. They showed a mobile ad hoc network consisting of a collection of wireless mobile nodes that are capable of communicating with each other without the use of a network infrastructure or any centralized administration. MANET (MANET = Mobile Ad Hoc Network) is an emerging research area with practical applications. Wireless MANET is particularly vulnerable due to its fundamental characteristics, such as open medium, dynamic topology, distributed cooperation, and constrained capability. Routing plays an important role in the security of the entire network. In general, routing security in wireless MANETs appears to be a problem that is not trivial to solve. In this article, they study the routing security issues of MANETs, and analyze in detail one type of attack - the "black hole" problem - that can easily be employed against the MANETs. They propose a solution for the black hole problem for ad hoc on-demand distance vector routing protocols. The black hole is described as a node that has no route to some destinations, but it claims to do so. The authors propose a solution that relies on contacting the upstream node of the black hole, and they verify the existence of a route to the destination. However, it can be easily seen that the solution does not thwart colluding attackers.

Sanjay Ramaswamy, Huirong Fu, Manohar Sreekantaradhya, John Dixon and Kendall Nygard proposed in "Prevention of Cooperative Black Hole Attack in Wireless Ad Hoc Networks", in Proceedings of International Conference of Wireless Networks, 2003, a technique to identify multiple black holes cooperating with each other. Mobile ad hoc networks (MANETs) are extensively used in military and civilian applications. The dynamic topology of MANETs allows nodes to join and leave the network at any point of time. This generic characteristic of MANET has rendered it vulnerable to security attacks. In this paper, they address the problem of coordinated attack by multiple black holes acting in group. They present a technique to identify multiple black holes cooperating with each other and a solution to discover a safe route avoiding cooperative black hole attacks. The solution proposed somehow limits the capabilities of black hole attackers, restricting them to specific scenarios, while the proposed solutions require modifying the ad hoc routing protocols, lack depth and performance analysis.

Yih-Chun Hu, Adrian Perrig and David B. Johnson considered Ariadne, a secure on-demand routing protocol for ad hoc networks, in "Ariadne: A Secure On-Demand Routing Protocol for Ad Hoc Networks", in Proceedings of ACM MobiCom, 2002. The authors consider a mobile ad hoc network (MANET) as a group of autonomous wireless mobile computers (or nodes), in which nodes cooperate by forwarding packets for each other to allow them to communicate beyond direct wireless transmission range. They consider that ad hoc networks do not require centralized administration or fixed network infrastructure such as base stations or access points, and be quickly and inexpensively set up as needed. They are used in scenarios in which no infrastructure exists, or in which the existing infrastructure does not meet application requirements for reasons such as security or cost. The authors tackle the problem of more severe black hole attackers described as "traffic attractors" and "traffic sinks". This abstraction results in a very powerful attacker model. However, the proposed solution requires a new ad hoc routing protocol, where traffic source and destination authenticate every routing node in between.

Imad Aad, Jean-Pierre Hubaux, and Edward W. Knightly considered denial of service attacks in "Denial of Service Resilience in Ad Hoc Networks", in Proceedings of ACM MobiCom, 2004. The authors point out that significant progress has been made towards making ad hoc networks secure and DoS (DoS = Denial of Service) resilient. However, they point out that little attention has been focused on quantifying DoS resilience and ask the question whether ad hoc networks have sufficiently redundant paths and counter-DoS mechanisms to make DoS attacks largely ineffective. They further ask whether there are attack and system factors that can lead to devastating effects. They design and study DoS attacks in order to assess the damage that difficult-to-detect attackers can cause. The first attack they study, called the JellyFish attack, is targeted against closed-loop flows such as TCP; although protocol compliant, it has devastating effects. The second attack they consider is the black hole attack, which has effects similar to the JellyFish, but on open-loop flows. They quantify via simulations and analytical modeling the scalability of DoS attacks as a function of key performance parameters such as mobility, system size, node density, and counter-DoS strategy. One surprising result is that such DoS attacks can increase the capacity of ad hoc networks, as they starve multi-hop flows and only allow one-hop communication, a capacity-maximizing, yet clearly undesirable situation. The authors describe a very harmful form of black hole attacks which participate legally in all route discovery/establishment operations, systematically or probabilistically in case of gray hole, drop packets during the data-forwarding phase. To avoid that the upstream neighbor reports a route break to the source after several MAC-retransmissions (MAC = medium access control) with no MAC-ACKs (ACK = acknowledgement) received, the misbehaving node acknowledges the packet on the MAC layer, without forwarding it further. The MAC-ACK mechanism is usually used to detect node mobility/route break, therefore triggering route repairs. The authors propose no solution for the black hole attack but rather evaluate its impact on the network performance. They also discuss the non-ending attack/solution arms race, eventually leading to the use of end-to-end acknowledgement solutions. Again, the solutions proposed require either expensive authentications between nodes involved in routing, considerable changes to existing ad hoc routing protocols, complex reputation systems, or end-to-end acknowledgments.

Sergio Marti, T. J. Giuli, Kevin Lai, and Mary Baker investigated routing misbehavior in "Mitigating Routing Misbehavior in Mobile Ad Hoc Networks", in Proceedings of ACM MobiCom, 2000. Their paper describes two techniques that improve throughput in an ad hoc network in the presence of nodes that agree to forward packets but fail to do so. To mitigate this problem, they propose categorizing nodes based upon their dynamically measured behavior. They use a watchdog that identifies misbehaving nodes and a pathrater that helps routing protocols avoid these nodes. Through simulation, they evaluate watchdog and pathrater using packet throughput, percentage of overhead (routing) transmissions, and the accuracy of misbehaving node detection. When used together in a network with moderate mobility, the two techniques increase throughput by about 17% in the presence of 40% of misbehaving nodes, while increasing the percentage of overhead transmissions from the standard routing protocol's 9% to 17%. During extreme mobility, watchdog and pathrater can increase network throughput by 27%, while increasing the overhead transmissions from the standard routing protocol's 12% to 24%. The watchdog relies on overhearing the downstream neighbor to check whether the packet was actually forwarded. This mechanism can easily be fooled by a black hole that retransmits with low transmission power, using directional antennas, or that colludes with the next hop. That means although the watchdog is listening whether a certain network node forwards a data packet, the network node is forwarding the packet so the watchdog is satisfied, however using a directional antenna transmitting the packet in a wrong direction, i.e. towards the watchdog, or for example using lower transmission power, so the watchdog would be within its coverage but not the next intended network node.

Srdjan 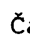 apkun and Jean-Pierre Hubaux look into building secure routing in "BISS: Building Secure Routing out of anIncomplete Set of Security Associations", in Proceedings of WiSE, 2003. They investigate secure routing in ad hoc networks in which security associations exist only between a subset of all pairs of nodes. They focus on source routing protocols and show that to establish secure routes, it is in general not necessary that security associations exist between all pairs of nodes; a fraction of security associations is sufficient. They analyze the performance of existing proposals for secure routing in such conditions. They also propose a new protocol, designed specifically for ad hoc networks with an incomplete set of security associations between the nodes. They call this protocol BISS: a protocol for Building Secure Routing out of an Incomplete Set of Security Associations. They present a detailed analysis of this protocol, based on simulations, and they show that it can be as secure as the existing proposals that rely on a complete set of security associations. So the authors propose to introduce a set of nodes that trust each other so they can communicate reliably in a network where not all nodes are trusted. However, the method depicts that trust nodes rely only on each other, forwarding each other's packets. Packets will not go through unreliable nodes even if they are the only possible way. The paper discusses the establishment of secure routes without dealing with misbehavior detection or rerouting. The proposed protocol will establish a network within another network where one network consists of trusted nodes and the other of untrusted nodes.

Yih-Chun Hu, Adrian Perrig, and David B. Johnson invesigate another attack in "Rushing Attacks and Defense in Wireless Ad Hoc Network Routing Protocols", in Proceedings of ACM Wise, 2003. The authors present the rushing attack in their paper, a new attack that results in denial-of-service when used against all previous on-demand ad hoc network routing protocols. For example, DSR (DSR = dynamic source routing), AODV (AODV = ad hoc on-demand distance vector), and secure protocols based on them, such as Ariadne, ARAN, and SAODV, are unable to discover routes longer than two hops when subject to this attack. This attack is also particularly damaging because it can be performed by a relatively weak attacker. They analyze why previous protocols fail under this attack and develop Rushing Attack Prevention (RAP), a generic defense against the rushing attack for on-demand protocols. RAP incurs no cost unless the underlying protocol, fails to find a working route, and it provides provable security properties even against the strongest rushing attackers.

Tronje Krop, Jörg Widmer, Matthias Hollick, Christian Prehofer, and Ralf Steinmetz also looked into security of ad hoc networks in "Crossing the Chasm with Ad Hoc Networks - The Provider-mediated Communication Paradigm". They found that ad hoc networks have attracted remarkable attention in the research community in recent years. Fashioned from whatever devices are immediately available, the self-organizing nature of ad hoc networks promises spontaneous communication in absence of infrastructure. Ad hoc networks have yet to deliver the high dependability, e.g. trustworthiness and predictability, of traditional mobile communication networks. They propose a provider-mediated communication paradigm to address these challenges. The mediation is achieved by means of an overlay network, which is established between nodes subscribed to a service provider, so-called provider nodes. Since such nodes are under control of the service provider, the overlay can be regarded as trustworthy. The implications reach far beyond augmenting cellular networks by multi hop capabilities. Many hard problems for ad hoc networks can be significantly simplified if a set of trusted nodes is known in advance. This applies in particular to network monitoring, trust management, network security, and robustness in the presence of faulty of malicious nodes. In their poster they give an overview of the proposed overlay architecture and provide initial results how it can be used to improve routing performance.

If one summarizes these proposed methods in order to secure ad hoc networks, it can be concluded that all proposed solutions require either expensive authentications between nodes involved in routing, considerable changes to existing ad hoc routing protocols, complex reputation systems or end-to-end acknowledgements.

EP 1 045 551 A2 discloses a method for the establishment of a transmission protocol proxy means at an intermediate point in a communication link between a mobile user and a data node. The transmission protocol proxy means operates to intercept data packets from the data source, which may be the data node or the mobile user, buffers those packets prior to forwarding them onto the intended data sink, and returns an acknowledgement to the data source indicating receipt of the data packets, according to the operative transmission protocol. The transmission protocol proxy means can, for example, be used in an IP environment, having a landmark link and a wireless link as, for example, in a scenario where a mobile user accesses the Internet.
Legacy TCP views the whole path, comprising the wired part and the wireless part, as a single loop and adapts the data rate accordingly. The provided method splits the data path into two loops, each of which adapts to the characteristics of the medium separately. This is done by inserting a proxy node between the wired and the wireless parts. The proxy adapts the data rate on each side of the network separately, aiming to maximize the whole throughput. However, the transmission protocol proxy has no means to detect or circumvent any malicious node between the two end points of transmissions, i.e. said mobile user and the data node.

Therefore, it is the objective of the present invention to provide a concept that allows to secure routes in ad hoc networks, establish a mechanism to identify and circumvent black holes, and to provide robustness in ad hoc networks against attacks.

This objective is achieved by an overlay transceiver apparatus according to claim 1, a method of transceiving according to claim 32, and a computer program according to claim 33.

The present invention provides an overlay transceiver apparatus, comprising a receiver module for receiving a data packet, having a routing portion and a payload portion containing underlay payload data. The overlay transceiver apparatus further comprises a packet interpreter for interpreting the received data packet to find out information on an underlay data source from the routing portion of the received data packet and on underlay payload data from the payload portion of the received data packet, the underlay payload data having information on an overlay data source and on an overlay data destination; and for interpreting the underlay payload data to find out the information on the overlay data source and on the overlay data destination. The overlay transceiver apparatus further comprises a controller module for generating an acknowledgement data packet, comprising information on the underlay data source in the routing portion and an overlay acknowledgement in the payload portion of the acknowledgement data packet, and for generating a forward data packet with a routing portion and a payload portion comprising information on the overlay transceiver apparatus identity and an underlay data destination in the routing portion; and the underlay payload data in the payload portion, the underlay payload data having information on an overlay data source and on the overlay data destination. The overlay transceiver apparatus further comprises a transmitter module for transmitting the acknowledgement data packet and the forward data packet.

The present invention further provides a method of transceiving, comprising the steps of receiving a data packet, having a routing portion and a payload portion containing underlay payload data. The method of transceiving further comprises the step of interpreting the received data packet to find out information on an underlay data source from the routing portion of the received data packet and on underlay payload data from the payload portion of the received data packet, the underlay payload data having information on an overlay data source and on an overlay data destination; and for interpreting the underlay payload data to find out the information on the overlay data source and the overlay data destination. Furthermore, the method of transceiving comprises the step of generating an acknowledgement data packet, comprising information on the underlay data source in the routing portion and an overlay acknowledgement in the payload portion of the acknowledgement data packet, and generating a forward data packet with a routing portion and a payload portion, comprising information on the overlay transceiver apparatus identity and an overlay data destination in the routing portion; and the underlay payload data in the payload portion, the underlay payload data having information on an overlay data source and on the overlay data destination. The method of transceiving further comprises the step of transmitting the acknowledgement data packet and the forward data packet.

The present invention is based on the finding that an ad hoc or multi hop network can be secured, by using cooperation among operator controlled nodes to detect misbehaving/black hole nodes in an unreliable network and bypass them. The idea relies on establishing a virtual topology in an overlay that uses the actual network of nodes, over which reliable communication paths are built between the hops of the overlay or virtual network. Reliability is assured on a per-hop basis between trusted overlay nodes and shortens misbehaving detection times and the subsequent route re-establishment time. Virtual topology awareness at the virtual network nodes allows identifying routes through the unreliable network, containing a misbehaving node, and enables fast bypassing of these routes by using alternative routes.

An advantage of the present invention is that the proposed mechanism is highly reliable, even when considering a large class or generic powerful misbehaving nodes. The use of the virtual network topology enables nodes of the virtual network to detect and bypass misbehaving nodes in short times, without requiring any support from the unreliable underlying network. The present invention makes use of unreliable ad hoc networks with their corresponding routing protocols, whereby these routing protocols are left unchanged. The underlying unreliable ad hoc network is not aware of the overlying virtual network topology. Therefore, the present invention does not require any changes to the unreliable network, nor to its routing protocols.

Another advantage of the present invention is that it avoids or bypasses black holes in their general sense, without limiting assumptions on their models or capabilities. This is achieved with very short misbehaving detection and rerouting times, since misbehaving route detection and rerouting is done on the basis of virtual network nodes, i.e. not along the full path through the unreliable network but rather between operator-controlled or trusted nodes only.

Embodiments of the present invention are described in detail with respect to the following figures, in which:
- Fig. 1a: shows an embodiment of the inventive transceiver apparatus;
- Fig. 1b: shows embodiments of the inventive data packets;
- Fig. 1c: shows embodiments of the inventive data packets;
- Fig. 2: shows an embodiment of the inventive overlay network;
- Fig. 3: shows an embodiment of the present invention exemplifying the detection of a misbehaving node;
- Fig. 4: shows another embodiment of a virtual topology;
- Fig. 5: shows an embodiment of an inventive network topology;
- Fig. 6: shows an embodiment of an inventive underlay and overlay network topology;
- Fig. 7: shows an underlay network with a misbehaving node;
- Fig. 8: shows another embodiment of an inventive network topology; and
- Fig. 9: illustrates an example black hole attacker.

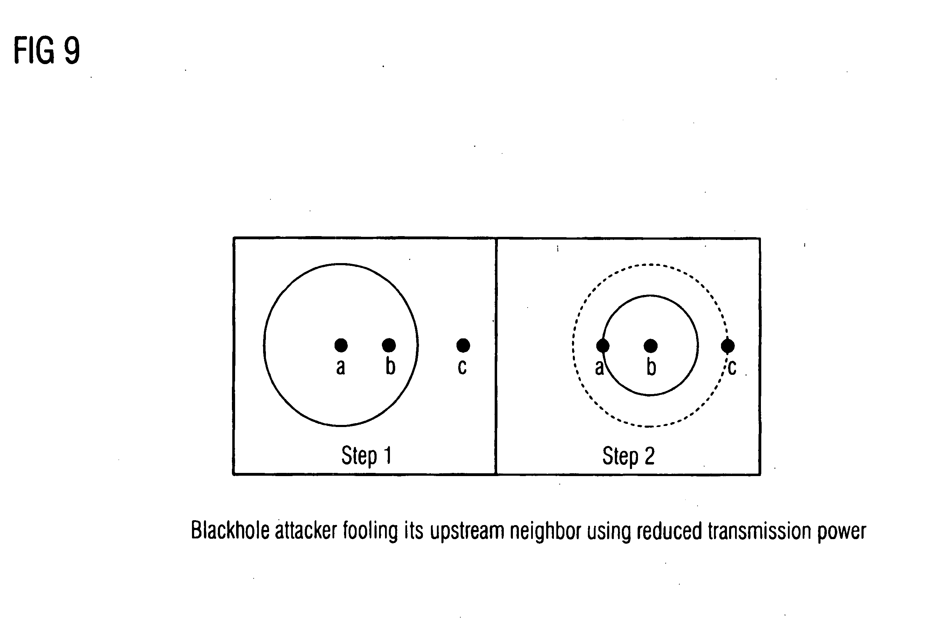

Fig. 9 shows a network scenario with three network nodes a, *b*, and *c.* Fig. 9 shows two steps in order to illustrate how a black hole node can fool its network neighbor. In step 1, which is depicted on the left-hand side of Fig. 9, network node a transmits a data packet to the network node b, in order to have the network node b forward this data packet to another network node c. In step 1 in Fig. 9, the circle around the network node a indicates the transmission range of network node a. From the range of network node a it can be seen that there is no direct transmission path to network node c, since network node c is out of the transmission range of network node a. According to step 1, b receives the transmission from network node a and acknowledges the reception of this packet. Network node a might check whether the potential black hole node b misbehaves by eavesdropping the packet forwarding.

The packet-forwarding scenario is depicted in step 2 on the right-hand side of Fig. 9. In order to fool the node a, b can for example adapt its transmission power or use directional antennas to reach the upstream node a but not the downstream node c. As illustrated in step 2 in Fig. 9, the network node b uses a transmission power that provides a range, in which network node a can realize the network node b forwarding its packet, however network node c is out of the range of network node b, and therefore the initiated data transmission of network node a never reaches network node c. This example shows how network node a can still be fooled by a misbehaving network node b, even if a mechanism as for example eavesdropping, i.e. verifying that the data packet is forwarded by a neighbored network node, is in place.

A similar attack as depicted in Fig. 9 can be carried out by using directional antennas, i.e. network node b would use a directional antenna, with a higher antenna gain towards network node a than it has towards network node c, evoking the similar effect as indicated in Fig. 9. These two techniques may require tampering with the hardware or firmware of a communication device. A simpler black hole attack could be performed by two, or even more, consecutive colluding nodes, where the upstream one does not report any route error to the traffic source, keeping it unaware of packet delivery failures. This requires simple changes to the routing software in the colluding nodes.

Three parameters capture the cost of counter-measures.

Td: The time to diagnose the problem, for example, the timeout for the end-to-end acknowledgement. This timeout increases when route lengths increase.

Tl: Time limitations before issuing new route requests, usually used to avoid flooding the network with control packets.

Tr: The time to reestablish a new route. Similar to Td, Tr increases with route lengths. Localization of the black hole becomes harder as the paths become longer and therefore the source node cannot easily establish a new node disjoint path, spending Tr at each try to establish a new route.

These parameters can be used to describe the performance of an ad hoc network.

The previous description of black hole attacks concerned the routing or packet forwarding phase only, i.e. if the traffic flow passes through the black hole, then it can perform packet dropping. However, to increase its chances of attracting traffic flows, a misbehaving node can tamper with route establishment/update information prior to the data-forwarding phase. This can for example be done by shortening the measured reported length of the path that uses the black hole.

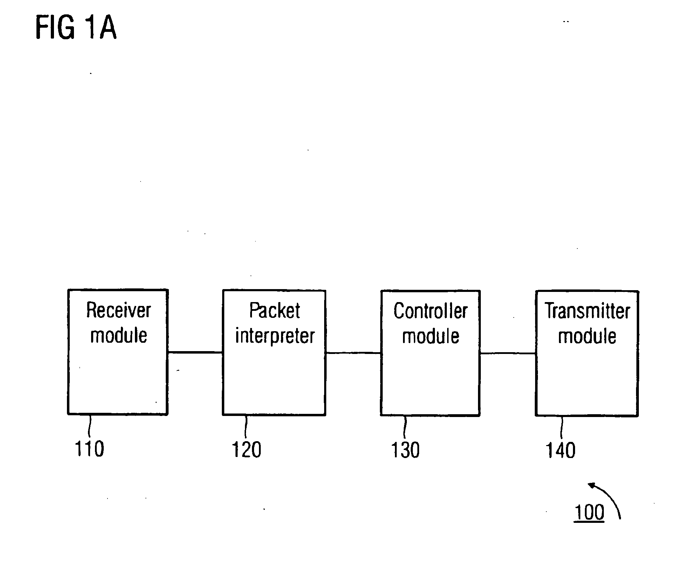

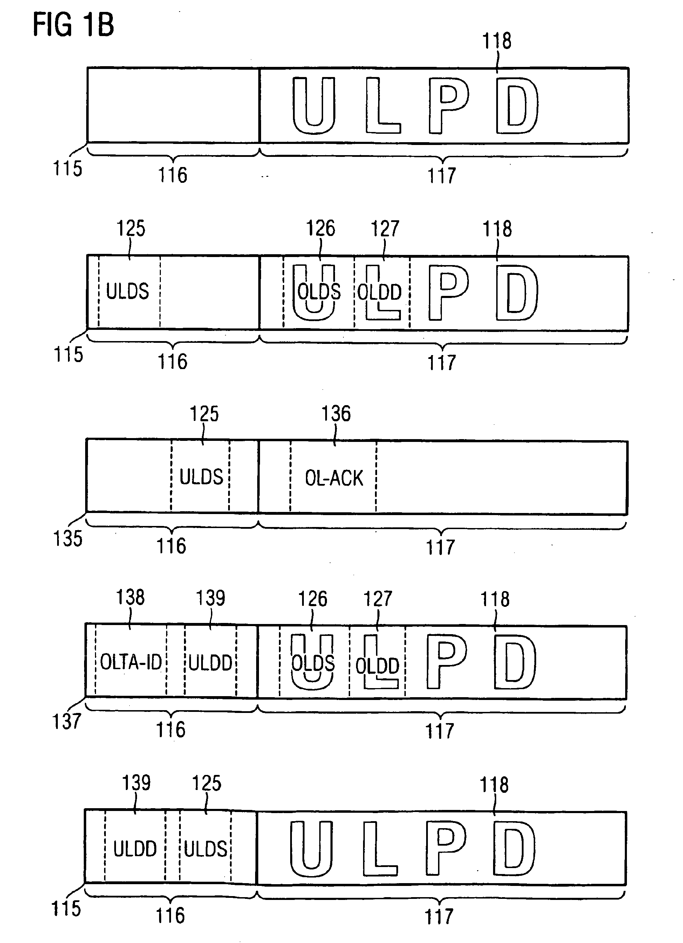

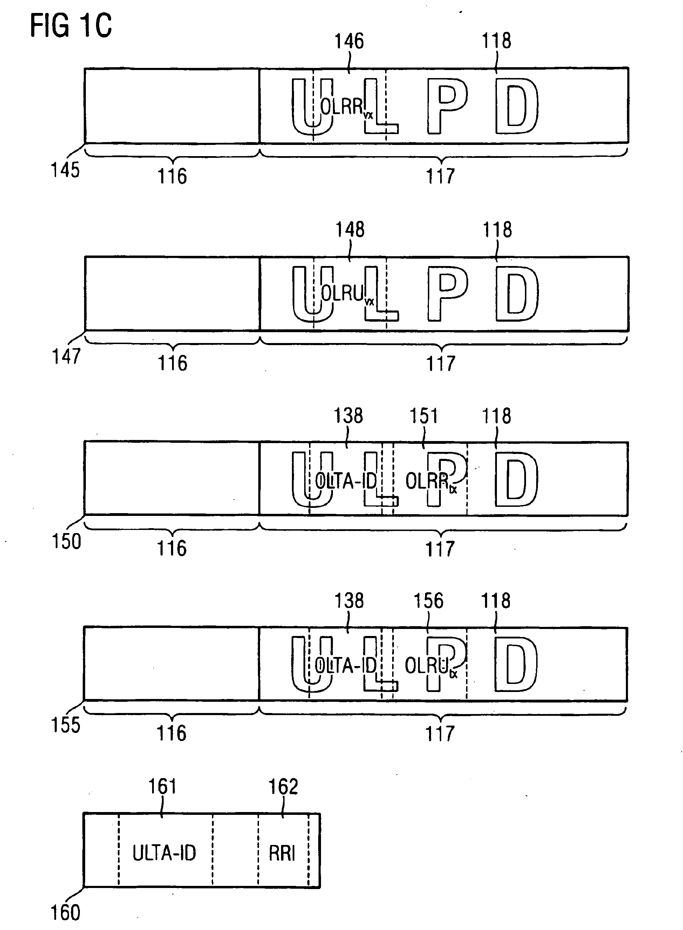

Fig. 1 shows an embodiment of the inventive overlay transceiver apparatus. 100. The overlay transceiver apparatus 100 comprises a receiver module 110, a packet interpreter 120, a controller module 130, and a transmitter module 140.

The overlay transceiver apparatus 100 comprises the receiver module 110 for receiving a data packet 115, as it is depicted in Fig. 1b. The data packet 115 has a routing portion 116 and a payload portion 117 containing underlay payload data (ULPD) 118. The overlay transceiver apparatus 100 further comprises a packet interpreter 120 for interpreting the received data packet 115 to find out information on an underlay data source 125 from the routing portion 116 of the received data packet 115, the underlay payload data 118 having information on an overlay data source 126 and on an overlay data destination 127, as depicted in Fig. 1b. The packet interpreter 120 interprets the underlay payload data 118 to find out the information on the overlay data source 126 and the overlay data destination 127.

Moreover, the overlay transceiver apparatus 100 comprises a controller module 130 for generating an acknowledgement data packet 135, which is depicted in Fig. 1b. The acknowledgement data packet 135 comprises information on the underlay data source 125 in the routing portion 116 and an overlay acknowledgement 136 in the payload portion 117 of the acknowledgement data packet 135. The controller module 130 further generates a forward data packet 137 with a routing portion 116 and a payload portion 117. The forward data packet 137 comprises information on the overlay transceiver apparatus identity 138 and on an underlay data destination 139 in the routing portion 116. The forward data packet 137 further comprises information on the underlay payload data 118 in the payload portion 117, the underlay payload data 118 having information on the overlay data source 126 and on the overlay data destination 127. The overlay transceiver apparatus 100 further comprises a transmitter module 140 for transmitting the acknowledgement data packet 135 and the forward data packet 137.

In one embodiment of the present invention overlay network nodes authenticate each other for example by using individual signatures or operator certificates, e.g. using their overlay transceiver apparatus identity 138. The overlay nodes could optionally use a cryptographic method, to transmit for example their overlay transceiver apparatus identity 138 encapsulated in underlay receive data packets 115 to their overlay network neighbors. The cryptographic method would provide another security mechanism between the overlay network nodes. Encapsulation and decapsulation is used between the overlay nodes to communicate with each other, i.e. overlay communication is done on a per-hop basis using the payload portion 117 of the receive data packets 115 and within the underlay payload data 118. Thus, underlay network nodes are not aware of the presence of overlay network nodes respectively of the presence of an overlay network at all.

In one embodiment of the present invention the packet interpreter 120 is adapted for interpreting the routing portion 116 of the received data packet 115, the routing portion comprising information on an underlay data destination 139 and on an underlay data source 125, to find out the information on the underlay data destination 139 and on the underlay data source 125, as it is illustrated in Fig. 1b.

In another embodiment of the present invention the packet interpreter 120 is adapted for interpreting the underlay payload data 118 of the received data packet 115 to find out whether the received data packet 115 is an overlay route reply receive packet 145, which is depicted in Fig. 1c, the overlay route reply receive packet having overlay route reply receive information 146 in the underlay payload data 118 and if so, to store the overlay route reply receive information 146.

In another embodiment of the present invention the packet interpreter 120 is adapted for interpreting the underlay payload data 118 of the received data packet 115 to find out whether the received data packet 115 is an overlay routing update receive packet 147, which is depicted in Fig. 1c, the overlay routing update receive packet 147 having overlay routing update receive information 148 in the underlay payload data 118 and if so, the packet interpreter 120 is adapted to store the overlay routing update receive information 148.

In another embodiment of the present invention the controller module 130 is adapted for generating an overlay route reply transmit packet 150, which is depicted in Fig. 1c, the overlay route reply transmit packet 150 comprising information on the overlay transceiver apparatus identity 138 and on an overlay route reply transmit information 151 in the underlay payload data 118. Furthermore, the transmitter module 140 is adapted for transmitting the overlay route reply transmit packet 150.

In another embodiment of the inventive overlay transceiver apparatus 100 the controller module 130 is adapted for generating an overlay routing update transmit packet 155, which is depicted in Fig. 1c, the overlay routing update transmit packet 155 comprising information on the overlay transceiver apparatus identity 138 and on an overlay routing update transmit information 156 in the underlay payload data 118. Furthermore, the transmitter module 140 is adapted for transmitting the overlay routing update transmit packet 155.

In another embodiment of the inventive overlay transceiver apparatus 100 the receiver module 110 is adapted for receiving an underlay route request packet 160, which is depicted in Fig. 1c, the underlay route request packet 160 comprising information on an underlay transceiver apparatus identity 161 and a route request indicator 162. The packet interpreter 120 is adapted for interpreting the underlay route request packet 160 to find out the information on the underlay transceiver apparatus identity 161. The controller module 130 is adapted for generating an underlay route request packet 160, the underlay route request packet 160 comprising information on an underlay transceiver apparatus identity 161 and a route request indicator 162. The transmitter module 140 is adapted for transmitting the underlay route request packet 160.

In one embodiment of the present invention the overlay transceiver apparatus 100 corresponds to an operator-controlled network node. By the mechanisms and data packets described above these operator-controlled nodes can trust each other and therefore can reliably authenticate each other. In a network consisting of overlay transceiver apparatuses 100 or also called operator-controlled nodes, and untrusted network nodes, the operator-controlled nodes can form a virtual network. Operator-controlled nodes are enabled to identify misbehaving nodes between each other,
where a misbehaving network node is a network node that disrupts the delivery of packets, for example any variant of black hole attackers as described above. Note that delivery disruption also occurs due to normal or regular node movement respectively disconnection as it frequently occurs in an ad hoc network. The present invention is not limited to the detection of black hole attackers that absorb 100% of the data packets only. It allows detecting a whole class of misbehaving nodes that fail to deliver or forward all or part of the traffic packets, for example black holes, gray holes and selfish nodes. For simplicity it is here referred to those misbehaving nodes as black holes or misbehaving nodes interchangeably.

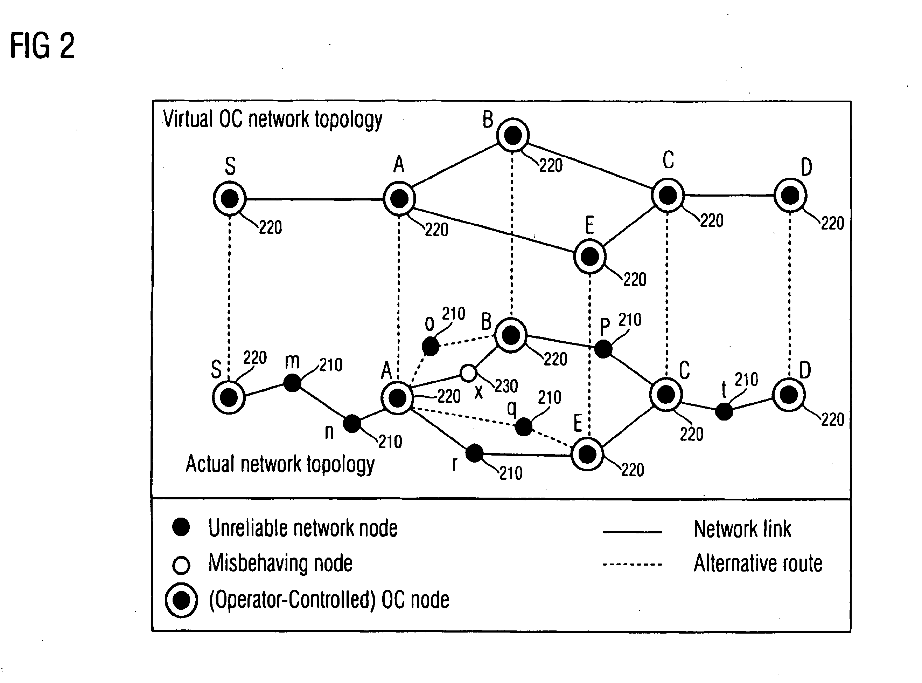

The present invention allows making operator controlled nodes cooperate, detect black holes and bypass them in an efficient way. Fig. 2 depicts an example network topology. The network depicted in Fig. 2 comprises a number of unreliable network nodes 210, which are indicated by black dots and labeled with lower-case letters. Furthermore, in the network depicted in Fig. 2, there is a number of operator-controlled nodes, which are according to an embodiment of the present invention inventive overlay transmitter apparatuses 220. The operator-controlled nodes 220 are indicated by black dots surrounded by a wide circle in Fig. 2. The overlay transceiver apparatuses or operator-controlled nodes 220 in Fig. 2 are labeled with capital letters. Furthermore, Fig. 2 depicts a misbehaving node 230 that is indicated by a black circle, in the example in Fig. 2, the misbehaving node is the node x. Communication paths or network links are indicated by solid lines in Fig. 2, whereas alternative routes are indicated by dotted lines. If for example node S sends data to node D, it needs to use the unreliable network, and data transfer happens along possible other operator-controlled nodes 220 on the way.

In the example depicted in Fig. 2, the operator-controlled nodes 220 need to discover each other. This is done utilizing underlay route request packets 160 and overlay route reply packets 145, 150. Referring to the example depicted in Fig. 2, for example, the operator-controlled node S transmits a route request packet 160 to a special non-existing destination. This could be done initially, for example when node S gets switched on, as well as frequently in order to discover appearing and disappearing adjacent operator-controlled network nodes 220. The special non-existing destination node S indicated in the route request packet 160 corresponds to a special underlay transceiver apparatus identity 161. This could for example be an underlay transceiver apparatus identity 161 that is not used anywhere in the underlay network. So underlay network nodes 210 forward this packet in order to route it to its potential destination, which, according to one embodiment of the present invention, is never found. However, operator-controlled nodes 220 react to this special underlay transceiver apparatus identity 161. From the operator-controlled nodes' 220 perspective, the special underlay transceiver apparatus identity 161 indicates another operator-controlled node 220 transmitting a route request, seeking to set up the virtual network between operator-controlled nodes 220 only. The underlay route request packet 160 is broadcast in the underlay network. Such underlay route request packets 160 are standard techniques in ad hoc networks to discover routes to given destinations.

When another operator-controlled node 220, for example node A in the example depicted in Fig. 2, receives this special route request, special because it is transmitted to the conventional non-existing destination using the special underlay transceiver apparatus identity, it replies to the underlay route request packet 160 using an overlay route reply packet 150. In the example depicted in Fig. 2, node A would generate an overlay route reply transmit packet 150, and transmit it to network node S. As the overlay route reply packets 145 and 150 are overlay packets, they are invisible to the underlay, and they are encapsulated at the underlay being transmitted in a unicast manner. According to an embodiment of the present invention, the operator-controlled network node 220 S receives the overlay route reply receive packet 145 from operator-controlled node 220 A. After reception of the overlay route reply receive packet 145 from network node A, network node S knows that network node A is its overlay neighbor, although in the underlay network there may be several unreliable network nodes 210 in between. According to an embodiment of the present invention, operator-controlled node 220 S updates its routing table. Through this mechanism, the virtual operator-controlled network is established. In another embodiment of the present invention an operator controlled network node does not forward underlay route request packets 160 any further if it replies with an overlay route reply transmit packet 150, in order to have only next-hop neighbors on the virtual network transmit overlay route reply transmit packets and to prevent flooding the network with underlay route request packets 160.

The operator-controlled network nodes 220 periodically update each other. Regular updates are carried out by transmitting each other their routing tables, utilizing overlay routing update packets 147, 155. When receiving and evaluating these updates, each operator-controlled node 220 constructs a given vision of the topology of the overlay network. The mechanism described above consists of what is called link state routing, which is known in literature. Here, it is employed on the overlay network only, enabling a proper neighbor discovery with an arbitrary underlay. Using a special route request, i.e. a special underlay route request indicator 162, enables the operator-controlled nodes 220 to discover each other. Routing mechanisms or routing protocols that are used in the underlay network, i.e. between the unreliable network nodes 210, are not subject to this invention as the underlay network is not assumed to be aware of the described mechanisms that take place in the overlay network. Therefore, potentially any routing protocol mechanism can be used in the underlay network and no further assumptions need to be made.

On the overlay network, a topology-aware routing protocol, for example link state routing, is used. In the example in Fig. 2, a source node S transmits packets to the destination node D, following the virtual topology, for example S-A-B-C-D. On the actual network, i.e. including the unreliable network nodes 210, virtual network packets are encapsulated respectively decapsulated into packets of the ad hoc routing protocol in use, and transmitted on a per-virtual-network-hop basis. In the actual network, packets flow on series of end-to-end actual network routes, for example S-m-n-A, then A-x-B, then B-p-C, then C-t-D, which all together form the end-to-end route in the virtual topology, i.e. S-D.

In the example depicted in Fig. 2, the operator-controlled node 220 S checks which route to take to node D on the overlay according to its vision of the network. One route according to Fig. 2 goes to operator-controlled nodes 220 A, B, C then D. On the underlay network, several underlay nodes 210 may exist between S and A, A and B, B and C, as well as between C and D.

In order to transmit a packet from S to DoS passes the packet to its underlay, which encapsulates it in an underlay packet and transmits it to A. After A has received the packet, it decapsulates it, checks the next hop, which is B, passes it to the underlay which encapsulates it again and transmits it to B. At the operator-controlled node 220 B as well as at C, similar steps are done. The information on the next overlay hop is invisible to the underlay as it is carried in the underlay payload data 118, cf. Fig. 1b and Fig. 1c.

In one embodiment of the present invention, the operator-controlled network nodes 220 check for route information anomalies by exchanging route information with other operator-controlled nodes 220. This is carried out utilizing overlay routing update packets 147, 155. A routing anomaly could for example be that a first operator-controlled network node 220 reports to a second operator-controlled network node 220 that it has a direct connection, i.e. that the first operator-controlled network node 220 is in direct range of the second operator-controlled network node 220. If the first operator-controlled network node 220 does not have a direct connection with the second operator-controlled network node 220, then there is a difference in the routing tables, which could for example be evoked by a misbehaving node in between, extending the range of the second operator-controlled network node 220, but not extending the range of the first operator-controlled network node 220.

In another embodiment of the present invention, the operator-controlled network nodes 220 check for black holes, i.e. for nodes that do not forward packets. This is done on a hop-per-hop basis on the overlay network. One way for doing this is to have every overlay node acknowledge the reception of an overlay packet. In the example depicted in Fig. 2, this would mean that A acknowledges to S, B acknowledges the reception of the data packet to A, C acknowledges to B, and D acknowledges to C. If for example node A does not receive an acknowledgement from B, A detects a black hole in between, and tries to use an alternative route to B. In Fig. 2, this is indicated by the route going across the node x, which is in case the misbehaving node, node x however is detected replaced by the route going through the unreliable network node 210 labeled with o. If the black hole is detected, an operator-controlled node checks for an alternative route to the same next hop in the virtual network, in Fig. 2, A detects something is wrong on the route through x to B, then it checks if it can send the packet through node o.

In the case where no alternative route is available or found, the operator-controlled network node 220 uses another route of the virtual network. In the example depicted in Fig. 2, that would mean if the route through the unreliable network node 210 o does not work or does not exist, i.e. if no acknowledgement from B is received, then the operator-controlled network node 220 A can still use the route through E. This corresponds to a change of route in the overlay network. Additionally, in that case, the network node A would update and inform the other operator-controlled nodes 220 of the virtual network, in order to keep their routing tables up to date. This is done by exchanging overlay routing update packets 147, 155. In the example, the operator-controlled node 220 A tells all overlay nodes, i.e. all operator-controlled nodes 220 of the virtual network that something is wrong between A and B so no operator-controlled node 220 would use a route including the segment between A and B of the overlay topology.

Operator-controlled nodes 220 exchange local topology information between each other over multiple paths. Operator-controlled nodes 220 exchange information about their next operator-controlled neighbors within the virtual network, which allows developing their own view on the operator-controlled network topology. This is carried out by exchanging their routing tables, for example containing all routes to any known operator-controlled network node 220. By receiving routing tables from other operator-controlled network nodes 220, an operator-controlled network node 220 can derive routes to other operator-controlled network nodes 220, alternative routes to operator-controlled network nodes 220, and also discover the virtual network topology. As mentioned above, this mechanism enables detecting black holes that use false route advertisement or information to attract traffic.

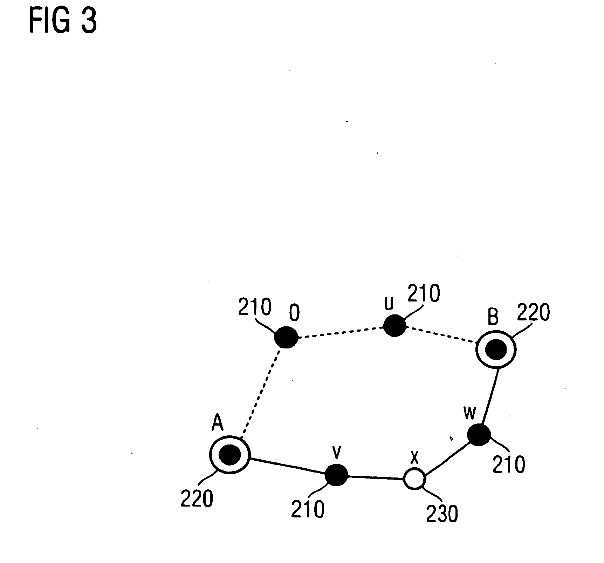

Fig. 3 shows an example scenario for this case. Fig. 3 shows two operator-controlled network nodes 220 A and B. Furthermore, Fig. 3 shows a route from A to B passing through an unreliable network node 210 v, a misbehaving network node 230 x, and another unreliable network node 210 w. Moreover, in Fig. 3 there exists an alternative route between A and B going through the two unreliable network nodes 210 o and u. The misbehaving network node 230 x may transmit route advertisements to A and inform it that it has a short route to for example E, according to the network depicted in Fig. 2. If A, B, and E exchange information on their neighbors, such incorrect announcements can be detected by A, and the route from A to B can be identified as passing through the black hole x.

During packet forwarding, i.e. when an operator-controlled network node 220 forwards a data packet to another operator-controlled network node 220, multiple black hole detection techniques can be used on every hop of the virtual topology. In another embodiment of the present invention, a per-virtual-network-hop acknowledgement can be used for every packet or every group of packets. In this case, the overlay transceiver apparatus 100 transmits an acknowledgement data packet 135 in response to every forwarded packet. The forwarded packet again would correspond to a forward data packet 137, allowing and enabling the next virtual network node respectively the next overlay transceiver apparatus 100 to acknowledge the forward data packet 137 with another acknowledgement data packet 135. If such an acknowledgement is missing, the upstream operator-controlled neighbor node infers a black hole exists between the two operator-controlled nodes 220 and assumes that the route is broken.

A normal route break, due to node mobility for example, may be identified by the underlying ad hoc routing protocol, depending on the black hole type/implementation. In another embodiment of the present invention an operator controlled network node 220 transmits an acknowledgement data packet 135 per group of packets, so the data traffic overhead caused by the per-hop acknowledgement mechanism is reduced as a group of forward data packets 137 is acknowledged at once. The number of forward data packets that are acknowledged at once can be optimized in dependence on the network load, operator controlled node density etc.

Finding alternative routes on the same virtual network hop depends on the underlying ad hoc routing protocol in use and the capabilities of operator-controlled nodes 220. For instance, using AODV (AODV = Ad Hoc On-demand Distance Vector routing) during the route discovery phase, A has to store both route replies (route request transmitted to B) from o and x, which is not provided by the current AODV protocol. Such optional capabilities are to be implemented in operator-controlled network nodes 220 only. In case of a normal route break and proper identification by the underlying ad hoc routing protocol, the reestablishment of a new distinct alternative route from A to B is made easier.

The present invention provides the advantage that regardless of the detection method used, per-virtual-network-hop acknowledgements or any other solution, shortening the actual network end-to-end paths to per-virtual-network-hop paths makes detection, for example timeouts for acknowledgements, considerably faster. This helps shortening the delay of the whole route reestablishment process by decreasing Td.

Another significant advantage of the present invention is the option of being able to choose other actual network routes not requiring changing all network nodes but rather the operator-controlled network nodes 220 only. Using an alternative route on the virtual operator-controlled network is possible due to the superposition of the topology-aware routing over the ad hoc routing used in the actual network. This shortens the route reestablishment time Tr, since only segments of the end-to-end route are reestablished and the segment routes are typically shorter. Without this overlay information, i.e. in a normal ad hoc network using for example AODV, the source would try to reestablish a new route, typically long, and probably going through the same black hole again, i.e. using multiple Td + Tr.

Another advantage of the present invention is that a new traffic flow from another operator-controlled network node won't go through the black hole previously detected, due to the link state information that the operator-controlled network nodes 220 exchange among each other. This is another considerable enhancement over flat ad hoc networks, due to the shortening of the detection and route reestablishment times, while having a rough localization of the misbehaving nodes.

Another advantage of the present invention occurs when compared to the traditional solution of sending actual network end-to-end acknowledgements, probably the unique solution for nodes in the untrusted network. However, operator-controlled network nodes 220 provide a powerful means of improving the performance of a network under attack, assuming no operator-controlled nodes misbehave.

This enhancement comes at the cost of using per-hop acknowledgements on the virtual network, i.e. each packet, respectively group of packets, transmitted or forwarded by a node gets acknowledged by its downstream neighbor of the virtual network in this embodiment of the present invention.

False positives take place when normal network nodes are being detected as misbehaving nodes. Checking for black holes is done in one example of the present invention using per-virtual-network-hop acknowledgements. The absence of those acknowledgements can be due to problems at reception, for example a node moved away, a link broke, a node failure, or just no more battery energy. Furthermore, they can be due to problems at transmission, for example the channel is congested, the wireless link queue builds up and packets get dropped, or a misbehaving node is on the path between the two operator-controlled network nodes 220. All three cases lead to the same result: the packet is not delivered and therefore not acknowledged. However, ad hoc routing protocols provide diagnosing messages for the first two cases. When a node receives a packet, it acknowledges it at the MAC (MAC = Medium Access Control) layer. If no MAC acknowledgement is received, the upstream node retransmits the frame until it gets acknowledged, or it transmits back a route break message to the source. When a node cannot transmit packets in its interface queue, it either reports network unreachable, wouldn't reply to route requests at initial route setup and route updates anymore, or it wouldn't be able to receive the packet for the same reasons, i.e. the shared channel is busy.

Therefore, the lack of per-virtual-network-hop acknowledgements, without detecting any route errors is a reliable indication of misbehaving nodes on the path. Misbehaving nodes should not be detected after a single non-acknowledged packet. A node may move right after receiving the packet, without being able to forward it further on the path. Even though such an event is rare, it should not lead, alone, to the detection of a misbehaving node. In another embodiment of the present invention a small threshold of unacknowledged packets should be tolerated, slightly increasing the false negatives (nodes misbehaving without being detected) on the one hand, but on the other hand it takes into consideration moving nodes in the network.

Considering the network shown in Fig. 2 again, during the route establishment phase for the traffic between S and D (via A, B and C), x can only intercept the route information from A to B, therefore the overlay is considerably limiting its misbehaving capabilities. For route requests from A to B, if x shortens the hop count from A to B, route information exchanged between A and B helps detecting the misbehavior somewhere in the path. Although the exact position of the misbehaving node on the path cannot be detected, the misbehaving path can reliably be detected and then circumvented. If the black hole is on a path of more than three hops between A and B, as for example A-v-x-w-B in Fig. 3, considering the ad hoc routing protocol in use is AODV, A only sees v, and B only sees w, therefore x can reduce the hop count down to two hops. The probability of success of x decreases as the network density increases, and as the number of operator-controlled network nodes 220 increases. In any case, the black hole detection is still guaranteed during the data-forwarding phase. As depicted in Fig. 9, x may increase its transmission power and its receiver sensitivity to practically built a shorter path, for example down to two hops from A to B. Using legacy AODV, this attack will not be detected at the route establishment phase but eventually at the data-forwarding phase. Though not totally guaranteeing the detection of the attacks, the detection during the route establishment phase may still be helpful to reduce the diagnosis time, Td, and rerouting time, Tr.

According to the example depicted in Fig. 2 and according to another embodiment of the present invention, during the data-forwarding phase, the operator-controlled network node 220 S transmits a packet to the operator-controlled network node 220 D. On the virtual network, the packet follows the path: S-A-B-C-D. On the underlying, i.e. the unreliable ad hoc network, the packet gets encapsulated at S, transmitted to A, which is the end destination for the underlying network, via m and n. After decapsulating the packet, A acknowledges the reception of the packet to S. On its turn, A encapsulates the packet and sends it to B, via x, the black hole. After timing-out for receiving the acknowledgement from B, A infers that a black hole is situated on the underlying untrusted route to B. A can possibly resend the packet via node o. If no acknowledgement is received from B, or if A detects a route break as for example if a node o moved away, A encapsulates the same packet and transmits it to E, via r.

E transmits back an acknowledgement to A, and A updates and informs the other operator-controlled network nodes 220 about the new topology and the misbehaving nodes' rough position, i.e. between A and B. Using the same methodology, the packet continues from E to C, then to D. Without the operator-controlled nodes, i.e. in a flat ad hoc network using AODV for instance, the source would detect a misbehavior somewhere in the network after timing-out for an acknowledgement from D. Such an end-to-end timeout detection delay Td is considerably higher than the timeout described before between A and B. After detecting the misbehavior, the operator-controlled network node 220 S tries to reestablish a new route to D, "hoping" not to go via the black hole. Reestablishing a route from S to D takes much more time Tr than when A reestablishes another route to B. Moreover, using the virtual network information, the operator-controlled network node 220 A can avoid going through black hole x, redirecting through E for instance, a maneuver impossible to perform in a flat ad hoc network without changing the existing protocols.

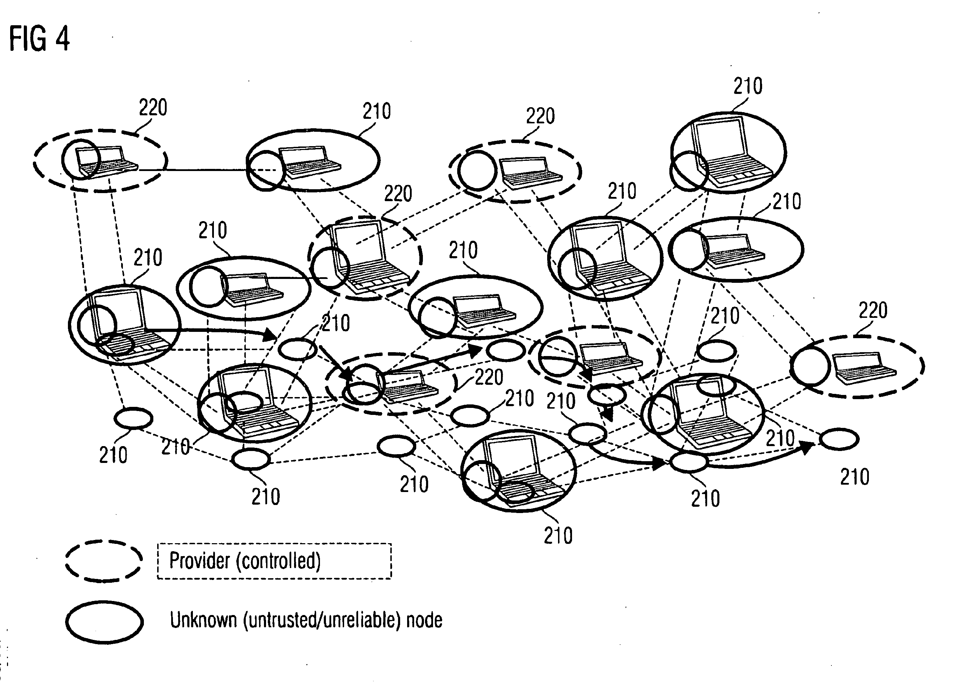

Fig. 4 depicts another embodiment of the present invention. Fig. 4 shows an ad hoc network consisting of provider-controlled nodes 220, which are indicated by dotted circles and unknown or distrusted respectively unreliable nodes 210, indicated by solid circles. Fig. 4 shall illustrate how an ad hoc network consisting of mobile devices as laptops and mobile phones form together an ad hoc or multi hop network.

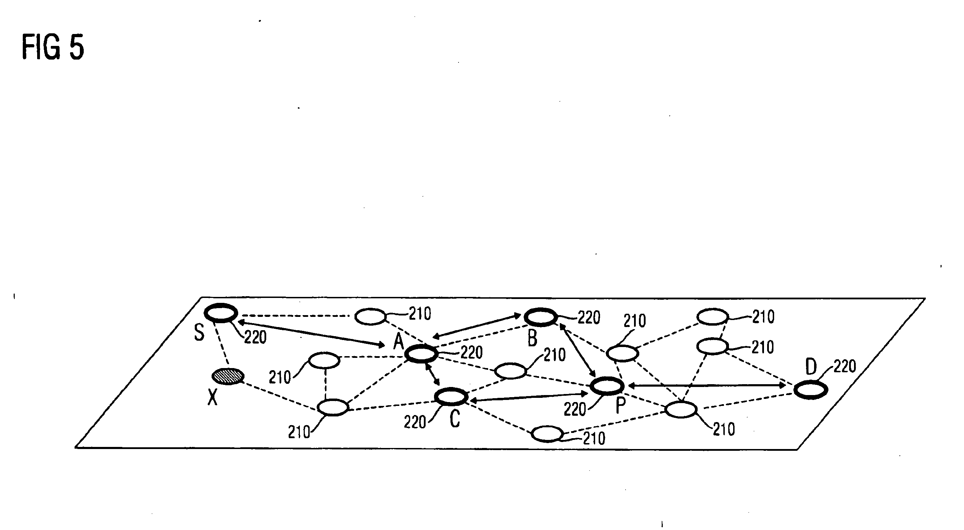

Fig. 5 shows another example network, where the unreliable network nodes 210 are indicated by gray circles, and a virtual network consisting of the operator controlled network nodes 220 S, A, B, C, P and D are indicated by black circles. The paths in the virtual network are indicated by double-sided arrows between the operator-controlled network nodes 220.

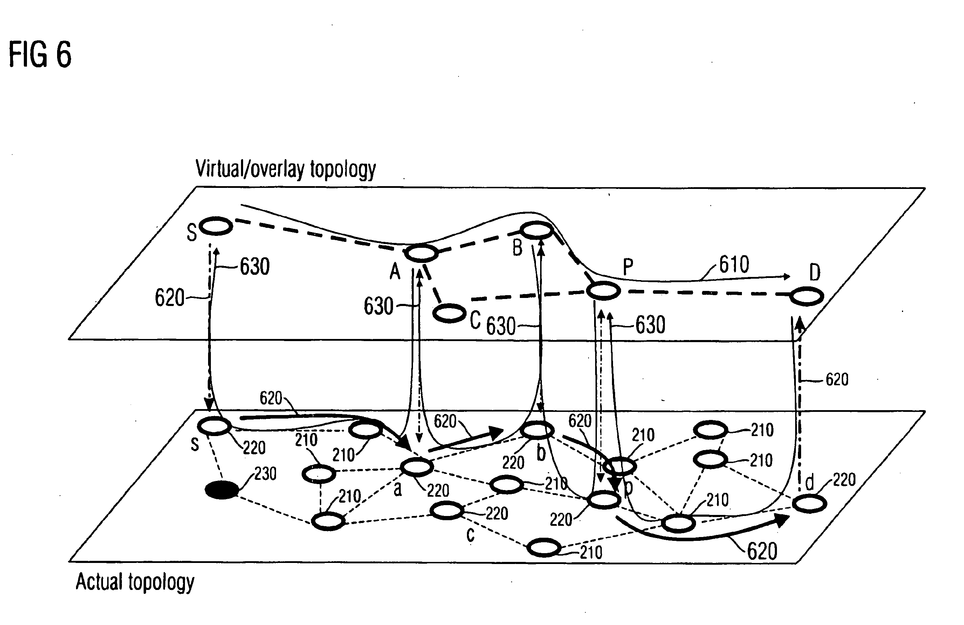

Fig. 6 shows the same network as shown in Fig. 5, however, the virtual network layer is shown separately on top of the entire network. Fig. 6 depicts an unreliable network layer comprising unreliable network nodes 210 and a reliable network layer, comprising operator controlled nodes 220. Furthermore, an arrow 610 indicates a path through the network between a source node S and a destination node D. Additionally, the same network path is given by the arrow 620 through the unreliable part of the network. Within the virtual network path, there is a hop-by-hop acknowledgement enabled. This is indicated by the arrows 630 between the individual virtual network nodes.

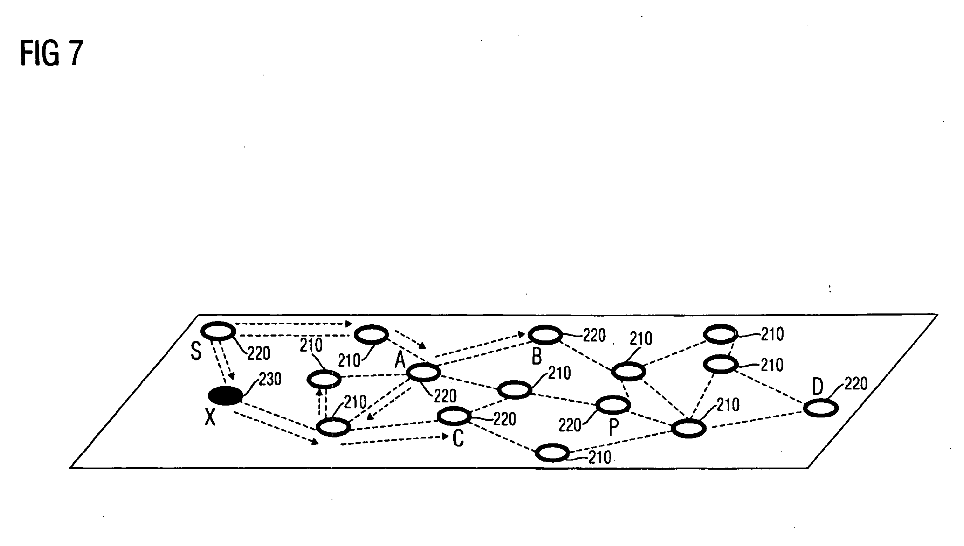

Fig. 7 shows an example of an underlay network having a misbehaving node x 230. The arrows in Fig. 7 shall indicate that there are multiple paths through the malicious node x as well as paths around the misbehaving node x. For example, there are two routes between S and A, so if S uses the route through the misbehaving node x but does not receive any acknowledgements from A within a given time, which could for example be realized using a timer or also certain triggers, then S can still use the route past the misbehaving node x.

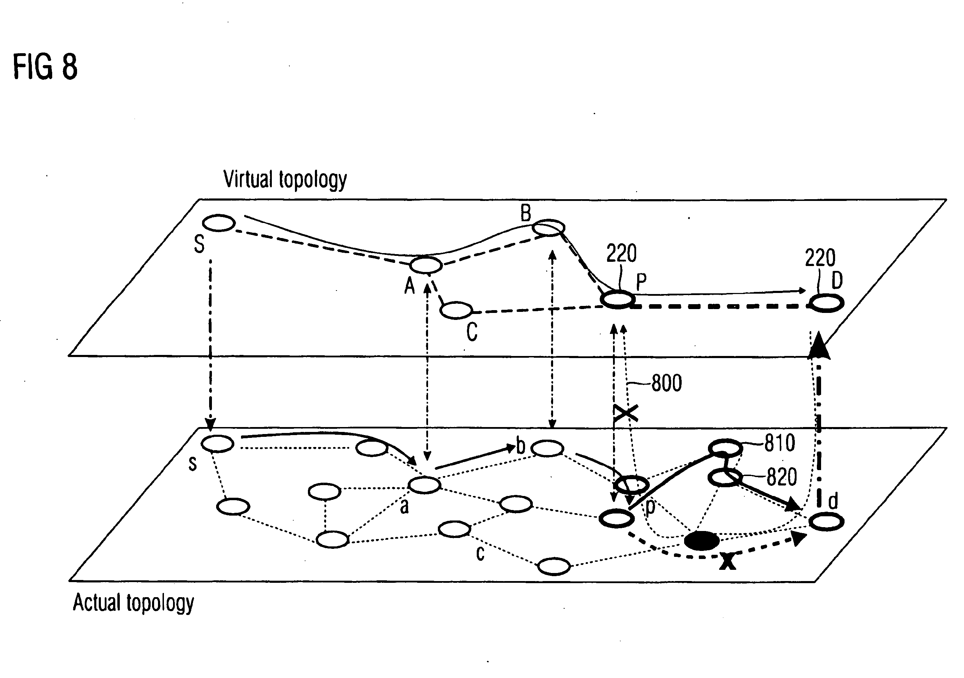

Another embodiment of the present invention is shown in Fig. 8. Fig. 8 depicts a similar network scenario as it was depicted in Fig. 6. However, Fig. 8 shall exemplify how a malicious network node x 230 can be circumvented between the hops P and D. The misbehaving node x between the operator-controlled network nodes 220 P and D starts misbehaving, causing a timeout at P because of not receiving acknowledgement data packet for forwarded data packets. The interrupted acknowledgement path is indicated by the crossed arrow 800 in Fig. 8. With the present invention instead of having to form an entirely new route through the whole network, network node P can now use the alternative route through the unreliable network nodes 810 and 820 to the network node D, and thereby circumvent the misbehaving node x.

The present invention provides the advantage that no expensive authentications between all nodes involved in routing has to be carried out. No changes to existing ad hoc routing protocols are required, no complex reputation systems are needed, and no end-to-end acknowledgments are necessary. The present invention is independent of the underlying routing protocols. Underlying protocols are not aware of any overlay transceiver apparatus according to the present invention. The introduced detection-rerouting algorithm is to be used by operator-controlled network nodes 220 only. The present invention shortens the end-to-end paths, i.e. introduces virtual-hop-per-virtual-hop acknowledgements and considerably reduces detection times for misbehaving nodes and the following route reestablishment delays, making the whole recovery procedure considerably faster.

Another advantage of embodiments of the present invention is that other existing solutions for other attacks can be implemented in overlay nodes only, yielding a lower protocol overhead, since changing all network nodes, i.e. underlay and overlay nodes, is not required anymore.

A similarity can be drawn between the present invention and TCP (TCP = Transport Control Protocol) operating over an unreliable MAC. If the MAC acknowledgements didn't exist, leaving reliability to be provided by TCP, when a packet collides and gets dropped, the TCP source would timeout after considerably long periods of time, taking into consideration long end-to-end paths and their corresponding delays. The MAC acknowledgements provide a fast local retransmission or local repair, just the way operator-controlled network nodes 220 do in the present invention. However, there is still a significant difference, since MAC acknowledgements in TCP applications happen between neighboring network nodes, whereas in embodiments of the present invention there is only a certain number of dedicated operator-controlled network nodes 220 to break down the long end-to-end paths into subpaths, which are secured individually by per-hop acknowledgements in the virtual network only. As per-hop acknowledgements are done between operator-controlled network nodes 220 only, the protocol overhead introduced is by far lower than the protocol overhead resulting from per-hop acknowledgements between all network nodes, as between the operator-controlled network nodes 220, a number of regular network nodes along a subpath can be assumed.

Depending on certain implementation requirements of the inventive methods, the inventive methods can be implemented in hardware or in software. The implementation can be performed using a digital storage medium, in particular a disk, DVD or a CD having electronically readable control signals stored thereon, which cooperate with a programmable computer system such that the inventive methods are performed. Generally, the present invention is, therefore, a computer program product with a program code stored on a machine readable carrier, the program code being operative for performing the inventive methods when the computer program product runs on a computer. In other words, the inventive methods are, therefore, a computer program having a program code for performing at least one of the inventive methods when the computer program runs on a computer.

## Claims

1. Overlay transceiver apparatus (100) for use in an ad hoc network having overlay nodes, which are trusted nodes, and having underlay nodes, which are potentially unreliable nodes, comprising
a receiver module (110) for receiving a data packet (115) having a routing portion (116) and a payload portion (117) comprising underlay payload data (118);
a packet interpreter (120) for interpreting the received data packet (115) to find out information on an underlay data source (125) in an underlay node from the routing portion (116) of the received data packet (115) and on the underlay payload data (118) from the payload portion (117) of the received data packet (115), the underlay payload data (118) having information on an overlay data source (126) in an overlay node and on an overlay data destination (127) in an overlay node and for interpreting the underlay payload data (118) to find out the information on the overlay data source (126) and on the overlay data destination (127);
a controller module (130) for generating an acknowledgement data packet (135) comprising information on the underlay data source (125) in a routing portion (116) and an overlay acknowledgement (136) in a payload portion (117), and for generating a forward data packet (137) with a routing portion (116) and a payload portion (117), the routing portion (116) of the forward data packet (137) comprising information on the overlay transceiver apparatus identity (138) and on an underlay data destination (139) in an underlay node,the payload portion (117) of the forward data packet (137) comprising the underlay payload data (118), the underlay payload data (118) having information on the overlay data source (126) and on the overlay data destination (127); and
a transmitter module (140) for transmitting the acknowledgement data packet (135) and the forward data packet (137).

2. Overlay transceiver apparatus (100) of claim 1, wherein the packet interpreter (120) is adapted for interpreting the routing portion (116) of the received data packet (115), the routing portion comprising information on an underlay data destination (139) and on an underlay data source (125) to find out the information on the underlay data destination (139) and on the underlay data source (125).

3. Overlay transceiver apparatus (100) of one of the claims 1 or 2, wherein the packet interpreter (120) is adapted for interpreting the underlay payload data (118) of the received data packet (115) to find out whether the received data packet (115) is an overlay route reply receive packet (145), the overlay route reply receive packet (145) having overlay route reply receive information (146) in the underlay payload data (118) and if so, to store the overlay route reply receive information (196).

4. Overlay transceiver apparatus (100) of one of the claims 1 to 3, wherein the packet interpreter (120) is adapted for interpreting the underlay payload data (118) of the received data packet (115) to find out whether the received data packet (115) is an overlay routing update receive packet (147), the overlay routing update receive packet (147) having overlay routing update receive information (148) in the underlay payload data (118) and if so, to store the overlay routing update receive information (148).

5. Overlay transceiver apparatus (100) of one of the claims 1 to 4, wherein the controller module (130) is adapted for generating an overlay routing reply transmit packet (150), the overlay routing reply transmit packet (150) comprising information on the overlay transceiver apparatus identity (138) and an overlay routing reply transmit information (151) in the underlay payload data (118); and wherein the transmitter module (140) is adapted for transmitting the overlay route reply transmit packet (150).

6. Overlay transceiver apparatus (100) of one of the claims 1 to 5, wherein the controller module (130) is adapted for generating an overlay routing update transmit packet (155), the overlay routing update transmit packet (155) comprising information on the overlay transceiver apparatus identity (138) and an overlay routing update transmit information (156) in the underlay payload data (118); and wherein the transmitter module (140) is adapted for transmitting the overlay routing update transmit packet (155).

7. Overlay transceiver apparatus (100) of one of the claims 1 to 6, wherein the receiver module (110) is adapted for receiving a route request packet (160), the route request packet (160) comprising information on an underlay transceiver apparatus identity (161) and a route request indicator (162); and wherein the packet interpreter (120) is adapted for interpreting the route request packet (160) to find out the information on the underlay transceiver apparatus identity (161).

8. Overlay transceiver apparatus (100) of one of the claims 1 to 7, wherein the controller module (130) is adapted for generating an underlay route request packet (160), the underlay route request packets(160) comprising information on an underlay transceiver apparatus identity (161) and a route request identity (162); and wherein the transmitter module (140) is adapted for transmitting the underlay route request packet (160).

9. Overlay transceiver apparatus (100) of claim 8, wherein the controller module (130) is adapted for generating an underlay route request packet (160) on a frequent time basis, the time basis being preset or configured or event-triggered.

10. Overlay transceiver apparatus (100) of one of the claims 1 to 9, wherein the packet interpreter (120) is adapted for triggering the controller module (130) for generating an overlay route reply transmit packet (150), and the transmitter module (140) is adapted to transmit the overlay route reply packet (150), after the receiver module (110) has received an underlay route request packet (160) and the packet interpreter (120) has found out information on a special underlay transceiver apparatus identity (161).

11. Overlay transceiver apparatus (100) of claim 10, wherein the special underlay transceiver apparatus identity (161) is not dedicated to any overlay transceiver apparatus (100) nor to an underlay transceiver apparatus.

12. Overlay transceiver apparatus (100) of one of the claims 10 or 11, wherein the packet interpreter (120) is adapted for storing the underlay data source of the underlay route reply packet (160) in an overlay next neighbor list if the packet interpreter (120) has found the special underlay transceiver apparatus identity (161).

13. Overlay transceiver apparatus (100) of one of the claims 10 to 12, wherein the packet interpreter (120) is adapted for interpreting an overlay route reply receive packet (145), the overlay route reply receive packet (145) comprising overlay route reply receive information (146) comprising an overlay route reply source or an overlay transceiver apparatus identity, the packet interpreter being adapted to store the overlay route reply source overlay transceiver apparatus identity in an overlay next neighbor list.

14. Overlay transceiver apparatus (100) of one of the claims 12 or 13, wherein the controller module (130) is adapted for generating an overlay routing update transmit packet (155), and the transceiver module (140) is adapted for transmitting the overlay routing update transmit packet (155) on a preset or preconfigured or an event-triggered time scale, the overlay routing update information (156) comprising information on the overlay next neighbor list.

15. Overlay transceiver apparatus (100) of claim 14, wherein the packet interpreter (120) is adapted for interpreting the information on another overlay transceiver apparatus's next neighbor list and for storing it in a routing table.

16. Overlay transceiver apparatus (100) of one of the claims 14 or 15, wherein the overlay routing update information (156) comprises next neighbor lists received from other overlay transceiver apparatuses.

17. Overlay transceiver apparatus (100) of claim 16, wherein the packet interpreter (120) is adapted for interpreting the information on all received overlay transceiver apparatus' next neighbor lists and for storing them in a routing table.

18. Overlay transceiver apparatus (100) of claim 17, wherein the controller module (130) is adapted for deriving an overlay topology from the routing table.

19. Overlay transceiver apparatus (100) of one of the claims 12 to 18, wherein the controller module (130) is adapted for generating the forward data packet (137), comprising the underlay data destination (139) derived from the next neighbor list based on the overlay data destination (127).

20. Overlay transceiver apparatus (100) of one of the claims 15 to 19, wherein the controller module (130) is adapted for generating the forward data packet (137), comprising the underlay data destination (139) derived from the routing table based on the overlay data destination (127).

21. Overlay transceiver apparatus (100) of one of the claims 19 or 20, wherein the underlay data destination (139) is derived according to an optimization criterion.

22. Overlay transceiver apparatus (100) of claim 21, wherein the optimization criterion is at least one of or a combination of a shortest path, lowest number of underlay hops, a lowest delay, or a lowest resource consumption.

23. Overlay transceiver apparatus (100) of one of the claims 1 to 22, wherein the controller module (130) sets up a timer when transmitting a forward data packet (137) and stores the forward data packet, and stops the timer when an acknowledgement data packet (135) is received.

24. Overlay transceiver apparatus (100) of one of the claims 1 to 23, wherein the acknowledgement data packet (135) has a reference to a forward data packet (137).

25. Overlay transceiver apparatus (100) of one of the claims 23 or 24, wherein the controller module (130) is adapted for triggering a retransmission of a stored forward data packet (137) after the timer has expired.

26. Overlay transceiver apparatus (100) of claim 25, wherein the controller module (130) is adapted for marking or deleting an overlay transceiver apparatus identity (138) from the neighbor list if no acknowledgement packet (135) is received and no underlay errors are reported for a transmitted forward data packet (137) after the timer has expired or a maximum number of retransmissions has been achieved, and no alternative path to the overlay transceiver apparatus is in the routing table.

27. Overlay transceiver apparatus (100) of one of the claims 25 or 26, wherein the controller module (130) is adapted for deriving an alternative path to the overlay data destination (127) if the timer has expired or a maximum number of retransmissions has been reached for the forward data packet (137), by checking the routing table for an alternative path to the overlay data destination (127) and if not available by triggering transmission of an underlay routing request packet (160) to discover a path to the overlay data destination (127).

28. Overlay transceiver apparatus (100) of one of the claims 25 to 27, wherein the controller module (130) is adapted for generating an overlay routing update transmission packet (147) including information on the overlay transceiver apparatus or the overlay topology segment not having sent the acknowledgement data packet (135), when the timer has expired ora maximum number of retransmissions has been reached.

29. Overlay transceiver apparatus (100) of one of the claims 15 to 28, wherein the packet interpreter (120) is adapted for interpreting or the controller module (130) is adapted for generating an overlay topology comprising alternative routes to different overlay transceiver apparatuses.

30. Overlay transceiver apparatus (100) of one of the claims 1 to 29, wherein the controller module (130) is adapted for generating an identifier for every packet comprising overlay information.

31. Overlay transceiver apparatus (100) of claim 30, wherein the packet interpreter (120) is adapted for interpreting only packets comprising the identifier.

32. Method of transceiving for use in an ad hoc network having overlay nodes, which are trusted nodes, and having underlay nodes, which are potentially unreliable nodes, comprising the steps of
receiving a data packet (115), having a routing portion (116) and a payload portion (117) comprising underlay payload data (118);
interpreting the received data packet (115) to find out information on an underlay data source (125) in an underlay node from the routing portion (116) of the received data packet (115) and on the underlay payload data (118) from the payload portion (117) of the received data packet (115), the underlay payload data (118) having information on an overlay data source (126) in an overlay node and on an overlay data destination (127) in an overlay node;
and for interpreting the underlay payload data (118) to find out the information on the overlay data source (126) and on the overlay data destination (127);
generating an acknowledgement data packet (135) comprising information on the underlay data source (125) in a routing portion (116) and an overlay acknowledgement (136) in a payload portion (117), and generating a forward data packet (137) with a routing portion (116) and a payload portion (117), the routing portion (116) of the forward data packet (137) comprising information on the overlay transceiver apparatus identity (138) and on an underlay data destination (139) in an underlay node, the payload portion (117) of the forward data packet (137) comprising the underlay payload data (118), the underlay payload data (118) having information on the overlay data source (126) and on the overlay data destination (127); and
transmitting the acknowledgement data packet (135) and the forward data packet (137).

33. Computer program with program code executing the method of claim 32 when the computer program runs on a computer.

## Patentansprüche

1. Überlagerungs-Sende/Empfangsgerät (100) zur Verwendung in einem Ad-hoc-Netzwerk mit Überlagerungsknoten, die vertrauenswürdige Knoten sind, und mit Unterlagerungsknoten, die potentiell nicht vertrauenswürdige Knoten sind, das folgende Merkmale aufweist:
ein Empfängermodul (110) zum Empfangen eines Datenpakets (115) mit einem Routing-Abschnitt (116) und einem Nutzlastabschnitt (117), der Unterlagerungsnutzlastdaten (118) aufweist;
einen Paketinterpretierer (120) zum Interpretieren des empfangenen Datenpakets (115), um eine Information über eine Unterlagerungsdatenquelle (125) in einem Unterlagerungsknoten aus dem Routing-Abschnitt (116) des empfangenen Datenpakets (115) und über die Unterlagerungsnutzlastdaten (118) aus dem Nutzlastabschnitt (117) des empfangenen Datenpakets (115) herauszufinden, wobei die Unterlagerungsnutzlastdaten (118) eine Information über eine Überlagerungsdatenquelle (126) in einem Überlagerungsknoten und über einen Überlagerungsdatenbestimmungsort (127) in einem Überlagerungsknoten aufweisen, und zum Interpretieren der Unterlagerungsnutzlastdaten (118), um die Information über die Überlagerungsdatenquelle (126) und über den Überlagerungsdatenbestimmungsort (127) herauszufinden;
ein Steuerungsmodul (130) zum Erzeugen eines Bestätigungsdatenpakets (135), das eine Information über die Unterlagerungsdatenquelle (125) in einem Routing-Abschnitt (116) und eine Überlagerungsbestätigung (136) in einem Nutzlastabschnitt (117) aufweist, und zum Erzeugen eines Weiterleitungsdatenpakets (137) mit einem Routing-Abschnitt (116) und einem Nutzlastabschnitt (117), wobei der Routing-Abschnitt (116) des Weiterleitungsdatenpakets (137) eine Information über die Überlagerungs-Sende/Empfangsgerätidentität (138) und über einen Unterlagerungsdatenbestimmungsort (139) in einem Unterlagerungsknoten aufweist, wobei der Nutzlastabschnitt (117) des Weiterleitungsdatenpakets (137) die Unterlagerungsnutzlastdaten (118) aufweist, wobei die Unterlagerungsnutzlastdaten (118) eine Information über die Überlagerungsdatenquelle (126) und über den Überlagerungsdatenbestimmungsort (127) aufweisen; und
ein Sendermodul (140) zum Senden des Bestätigungsdatenpakets (135) und des Weiterleitungsdatenpakets (137).

2. Überlagerungs-Sende/Empfangsgerät (100) gemäß Anspruch 1, bei dem der Paketinterpretierer (120) zum Interpretieren des Routing-Abschnitts (116) des empfangenen Datenpakets (115) angepasst ist, wobei der Routing-Abschnitt eine Information über einen Unterlagerungsdatenbestimmungsort (139) und über eine Unterlagerungsdatenquelle (125) zum Herausfinden der Information über den Unterlagerungsdatenbestimmungsort (139) und über die Unterlagerungsdatenquelle (125) aufweist.

3. Überlagerungs-Sende/Empfangsgerät (100) gemäß einem der Ansprüche 1 oder 2, bei dem der Paketinterpretierer (120) zum Interpretieren der Unterlagerungsnutzlastdaten (118) des empfangenen Datenpakets (115) zum Herausfinden, ob das empfangene Datenpaket (115) ein Überlagerungsroutenantwortempfangspaket (145) ist, wobei das Überlagerungsroutenantwortempfangspaket (145) eine Überlagerungsroutenantwortempfangsinformation (146) in den Unterlagerungsnutzlastdaten (118) aufweist, und wenn dies der Fall ist, zum Speichern der Überlagerungsroutenantwortempfangsinformation (146) angepasst ist.

4. Überlagerungs-Sende/Empfangsgerät (100) gemäß einem der Ansprüche 1 bis 3, bei dem der Paketinterpretierer (120) zum Interpretieren der Unterlagerungsnutzlastdaten (118) des empfangenen Datenpakets (115) zum Herausfinden, ob das empfangene Datenpaket (115) ein Überlagerungs-Routing-Aktualisierungs-Empfangspaket (147) ist, wobei das Überlagerungsführungsaktualisierungsempfangspaket (147) eine Überlagerungs-Routing-Aktualisierungs-Empfangsinformation (148) in den Unterlagerungsnutzlastdaten (118) aufweist, und wenn dies der Fall ist, zum Speichern der Überlagerungs-Routing-Aktualisierungs-Empfangsinformation (148) angepasst ist.

5. Überlagerungs-Sende/Empfangsgerät (100) gemäß einem der Ansprüche 1 bis 4, bei dem das Steuerungsmodul (130) zum Erzeugen eines Überlagerungs-Routing-Antwortsendepakets (150) angepasst ist, wobei das Überlagerungs-Routing-Antwortsendepaket (150) eine Information über die Überlagerungs-Sende/Empfangsgerätidentität (138) und eine Überlagerungs-Routing-Antwortsendeinformation (151) in den Unterlagerungsnutzlastdaten (118) aufweist; und bei dem das Sendermodul (140) zum Senden des Überlagerungs-Routing-Antwortsendepakets (150) angepasst ist.

6. Überlagerungs-Sende/Empfangsgerät (100) gemäß einem der Ansprüche 1 bis 5, bei dem das Steuerungsmodul (130) zum Erzeugen Überlagerungs-Routing-Aktualisierungssendepakets (155) angepasst ist, wobei das Überlagerungs-Routing-Aktualisierungssendepaket (155) eine Information über die Überlagerungs-Sende/Empfangsgerätidentität (138) und eine Überlagerungs-Routing-Aktualisierungssendeinformation (156) in den Unterlagerungsnutzlastdaten (118) aufweist; und bei dem das Sendermodul (140) zum Senden des Überlagerungs-Routing-Aktualisierungssendepakets (155) angepasst ist.

7. Überlagerungs-Sende/Empfangsgerät (100) gemäß einem der Ansprüche 1 bis 6, bei dem das Empfängermodul (110) zum Empfangen eines Routenanforderungspakets (160) angepasst ist, wobei das Routenanforderungspaket (160) eine Information über eine Unterlagerungs-Sende/Empfangsgerätidentität (161) und einen Routenanforderungsindikator (162) aufweist; und bei dem der Paketinterpretierer (120) zum Interpretieren des Routenanforderungspakets (160) zum Herausfinden der Information über die Unterlagerungs-Sende/Empfangsgerätidentität (161) angepasst ist.

8. Überlagerungs-Sende/Empfangsgerät (100) gemäß einem der Ansprüche 1 bis 7, bei dem das Steuerungsmodul (130) zum Erzeugen eines Unterlagerungsroutenanforderungspakets (160) angepasst ist, wobei das Unterlagerungsroutenanforderungspaket (160) eine Information über eine Unterlagerungs-Sende/Empfangsgerätidentität (161) und eine Routenanforderungsidentität (162) aufweist; und bei dem das Sendermodul (140) zum Senden des Unterlagerungsroutenanforderungspakets (160) angepasst ist.

9. Überlagerungs-Sende/Empfangsgerät (100) gemäß Anspruch 8, bei dem das Steuermodul (130) zum Erzeugen eines Unterlagerungsroutenanforderungspakets (160) auf Basis vieler Zeitpunkte angepasst ist, wobei die Basis der Zeitpunkte voreingestellt oder konfiguriert oder durch ein Ereignis ausgelöst ist.

10. Überlagerungs-Sende/Empfangsgerät (100) gemäß einem der Ansprüche 1 bis 9, bei dem der Paketinterpretierer (120) zum Auslösen des Steuerungsmoduls (130) zum Erzeugen eines Überlagerungsroutenantwortsendepakets (150) angepasst ist und das Sendermodul (140) angepasst ist, um das Überlagerungsroutenantwortpaket (150) zu senden, nachdem das Empfängermodul (110) ein Unterlagerungsroutenanforderungspaket (160) empfangen hat und der Paketinterpretierer (120) die Information über eine spezielle Unterlagerungs-Sende/Empfangsgerätidentität (161) herausgefunden hat.

11. Überlagerungs-Sende/Empfangsgerät (100) gemäß Anspruch 10, bei dem die spezielle Unterlagerungs-Sende/Empfangsgerätidentität (161) weder einem Überlagerungs-Sende/Empfangsgerät (100) noch einem Unterlagerungs-Sende/Empfangsgerät zugeordnet ist.

12. Überlagerungs-Sende/Empfangsgerät (100) gemäß einem der Ansprüche 10 oder 11, bei dem der Paketinterpretierer (120) zum Speichern der Unterlagerungsdatenquelle des Unterlagerungsroutenantwortpakets (160) in einer Liste der nächsten Nachbarn der Überlagerung angepasst ist, wenn der Paketinterpretierer (120) die spezielle Unterlagerungs-Sende/Empfang-Gerätidentität (161) gefunden hat.

13. Überlagerungs-Sende/Empfangsgerät (100) gemäß einem der Ansprüche 10 bis 12, bei dem der Paketinterpretierer (120) zum Interpretieren eines Überlagerungsroutenantwortempfangspakets (145) angepasst ist, wobei das Überlagerungsroutenantwortempfangspaket (145) eine Überlagerungsroutenantwortempfangsinformation (146) aufweist, die eine Überlagerungsroutenantwortquelle oder eine Überlagerungs-Sende/Empfangsgerätidentität aufweist, wobei der Paketinterpretierer angepasst ist, um die Überlagerungsroutenantwortquelle oder die Überlagerungs-Sende/Empfangsgerätidentität in einer Liste der nächsten Nachbarn der Überlagerung zu speichern.

14. Überlagerungs-Sende/Empfangsgerät (100) gemäß einem der Ansprüche 12 oder 13, bei dem das Steuerungsmodul (130) zum Erzeugen eines Überlagerungs-Routing-Aktualisuerungssendepakets (155) angepasst ist und das Sende/Empfangsmodul (140) zum Senden des Überlagerungs-Routing-Aktualisierungssendepakets (155) in einem voreingestellten oder vorkonfigurierten oder durch ein Ereignis ausgelösten Zeitmaßstab angepasst ist, wobei die Überlagerungs-Routing-Aktualisierungsinformation (156) eine Information über die Liste der nächsten Nachbarn der Überlagerung aufweist.

15. Überlagerungs-Sende/Empfangsgerät (100) gemäß Anspruch 14, bei dem der Paketinterpretierer (120) zum Interpretieren der Information über eine Liste der nächsten Nachbarn eines weiteren Überlagerungs-Sende/Empfangsgeräts und zum Speichern derselben in einer Routing-Tabelle angepasst ist.

16. Überlagerungs-Sende/Empfangsgerät (100) gemäß einem der Ansprüche 14 oder 15, bei dem die Überlagerungs-Routing-Aktualisierungsinformation (156) von anderen Überlagerungs-Sende/Empfangsgeräten empfangene Listen der nächsten Nachbarn aufweist.

17. Überlagerungs-Sende/Empfangsgerät (100) gemäß Anspruch 16, bei dem der Paketinterpretierer (120) zum Interpretieren der Informationen über alle empfangenen Listen der nächsten Nachbarn von Überlagerungs-Sende/Empfangsgeräten und zum Speichern derselben in einer Routing-Tabelle angepasst ist.

18. Überlagerungs-Sende/Empfangsgerät (100) gemäß Anspruch 17, bei dem das Steuerungsmodul (130) zum Ableiten einer Überlagerungstopologie von der Routing-Tabelle angepasst ist.

19. Überlagerungs-Sende/Empfangsgerät (100) gemäß einem der Ansprüche 12 bis 18, bei dem das Steuerungsmodul (130) zum Erzeugen des Weiterleitungsdatenpakets (137) angepasst ist, das den Unterlagerungsdatenbestimmungsort (139) aufweist, der basierend auf dem Überlagerungsdatenbestimmungsort (127) von der Liste der nächsten Nachbarn abgeleitet ist.

20. Überlagerungs-Sende/Empfangsgerät (100) gemäß einem der Ansprüche 15 bis 19, bei dem das Steuerungsmodul (130) zum Erzeugen des Weiterleitungsdatenpakets (137) angepasst ist, das den Unterlagerungsdatenbestimmungsort (139) aufweist, der basierend auf dem Überlagerungsdatenbestimmungsort (127) von der Routing-Tabelle abgeleitet ist.

21. Überlagerungs-Sende/Empfangsgerät (100) gemäß einem der Ansprüche 19 oder 20, bei dem der Unterlagerungsdatenbestimmungsort (139) gemäß einem Optimierungskriterium abgeleitet ist.

22. Überlagerungs-Sende/Empfangsgerät (100) gemäß Anspruch 21, bei dem das Optimierungskriterium zumindest eines aus oder eine Kombination aus einem kürzesten Weg, einer niedrigsten Anzahl von Unterlagerungssprüngen, einer geringsten Verzögerung oder eines geringsten Ressourcenverbrauchs ist.

23. Überlagerungs-Sende/Empfangsgerät (100) gemäß einem der Ansprüche 1 bis 22, bei dem das Steuerungsmodul (130) eine Zeitbestimmungseinrichtung einrichtet, wenn es ein Weiterleitungsdatenpaket (137) sendet, und das Weiterleitungsdatenpaket speichert und die Zeitbestimmungseihrichtung stoppt, wenn ein Bestätigungsdatenpaket (135) empfangen wird.

24. Überlagerungs-Sende/Empfangsgerät (100) gemäß einem der Ansprüche 1 bis 23, bei dem das Bestätigungsdatenpaket (135) einen Bezug auf ein Weiterleitungsdatenpaket (137) aufweist.

25. Überlagerungs-Sende/Empfangsgerät (100) gemäß einem der Ansprüche 23 oder 24, bei dem das Steuerungsmodul (130) zum Auslösen einer Neuübertragung eines gespeicherten Weiterleitungsdatenpakets (137) angepasst ist, nachdem die Zeitbestimmungseinrichtung abgelaufen ist.

26. Überlagerungs-Sende/Empfangsgerät (100) gemäß Anspruch 25, bei dem das Steuerungsmodul (130) zum Markieren oder Löschen einer Überlagerungs-Sende/Empfangsgerätidentität (138) aus der Liste der Nachbarn angepasst ist, wenn kein Bestätigungspaket (135) empfangen wird und keine Unterlagerungsfehler für ein gesendetes Weiterleitungsdatenpaket (137) berichtet werden, nachdem die Zeitbestimmungseinrichtung abgelaufen ist oder eine maximale Anzahl von Neuübertragungen erzielt worden ist und sich kein alternativer Weg zu dem Überlagerungs-Sende/Empfangsgerät in der Routing-Tabelle findet.

27. Überlagerungs-Sende/Empfangsgerät (100) gemäß einem der Ansprüche 25 oder 26, bei dem das Steuerungsmodul (130) zum Ableiten eines alternativen Wegs zu dem Überlagerungsdatenbestimmungsort (127) angepasst ist, wenn die Zeitbestimmungseinrichtung abgelaufen ist oder eine maximale Anzahl von Neuübertragungen für das Weiterleitungsdatenpaket (137) erreicht ist, durch Prüfen der Routing-Tabelle auf einen alternativen Weg zu dem Überlagerungsdatenbestimmungsort (127), und falls dieser nicht verfügbar ist, durch Auslösen einer Übertragung eines Unterlagerungs-Routing-Anforderungspakets (160), um einen Weg zu dem Überlagerungsdatenbestimmungsort (127) zu entdecken.

28. Überlagerungs-Sende/Empfangsgerät (100) gemäß einem der Ansprüche 25 bis 27, bei dem das Steuerungsmodul (130) zum Erzeugen eines Überlagerungs-Routing-Aktualisierungsübertragungspakets (147) angepasst ist, das eine Information über das Überlagerungs-Sende/Empfangsgerät oder das Überlagerungstopologiesegment, das das Bestätigungsdatenpaket (135) nicht gesendet hat, wenn die Zeitbestimmungseinrichtung abgelaufen ist oder eine maximale Anzahl von Neuübertragungen erreicht ist, aufweist.

29. Überlagerungs-Sende/Empfangsgerät (100) gemäß einem der Ansprüche 15 bis 28, bei dem der Paketinterpretierer (120) zum Interpretieren angepasst ist oder das Steuerungsmodul (130) zum Erzeugen einer Überlagerungstopologie angepasst ist, die alternative Routen zu unterschiedlichen Überlagerungs-Sende/Empfangsgeräten aufweist.

30. Überlagerungs-Sende/Empfangsgerät (100) gemäß einem der Ansprüche 1 bis 29, bei dem das Steuerungsmodul (130) zum Erzeugen eines Identifizierers für jedes Paket, das eine Überlagerungsinformation aufweist, angepasst ist.

31. Überlagerungs-Sende/Empfangsgerät (100) gemäß Anspruch 30, bei dem der Paketinterpretierer (120) zum Interpretieren lediglich von Paketen, die den Identifizierer aufweisen, angepasst ist.

32. Verfahren zum Senden und Empfangen zur Verwendung in einem Ad-hoc-Netzwerk mit Überlagerungsknoten, die vertrauenswürdige Knoten sind, und Unterlagerungsknoten, die potentiell nicht vertrauenswürdige Knoten sind, das die folgenden Schritte aufweist:
Empfangen eines Datenpakets (115) mit einem Routing-Abschnitt (116) und einem Nutzlastabschnitt (117), der Unterlagerungsnutzlastdaten (118) aufweist;
Interpretieren des empfangenen Datenpakets (115), um eine Information über eine Unterlagerungsdatenquelle (125) in einem Unterlagerungsknoten aus dem Routing-Abschnitt (116) des empfangenen Datenpakets (115) und über die Unterlagerungsnutzlastdaten (118) aus dem Nutzlastabschnitt (117) des empfangenen Datenpakets (115) herauszufinden, wobei die Unterlagerungsnutzlastdaten (118) eine Information über eine Überlagerungsdatenquelle (126) in einem Überlagerungsknoten und über einen Überlagerungsdatenbestimmungsort (127) in einem Überlagerungsknoten aufweisen;
Interpretieren der Unterlagerungsnutzlastdaten (118), um die Information über die Überlagerungsdatenquelle (126) und über den Überlagerungsdatenbestimmungsort (127) herauszufinden;
Erzeugen eines Bestätigungsdatenpakets (135), das eine Information über die Unterlagerungsdatenquelle (125) in einem Routing-Abschnitt (116) und eine Überlagerungsbestätigung (136) in einem Nutzlastabschnitt (117) aufweist, und Erzeugen eines Weiterleitungsdatenpakets (137) mit einem Routing-Abschnitt (116) und einem Nutzlastabschnitt (117), wobei der Routing-Abschnitt (116) des Weiterleitungsdatenpakets (137) eine Information über die Überlagerungs-Sende/Empfangsgerätidentität (138) und über einen Unterlagerungsdatenbestimmungsort (139) in einem Unterlagerungsknoten aufweist, wobei der Nutzlastabschnitt (117) des Weiterleitungsdatenpakets (137) die Unterlagerungsnutzlastdaten (118) aufweist, wobei die Unterlagerungsnutzlastdaten (118) eine Information über die Überlagerungsdatenquelle (126) und über den Überlagerungsdatenbestimmungsort (127) aufweisen; und
Senden des Bestätigungsdatenpakets (135) und des Weiterleitungsdatenpakets (137).

33. Computerprogramm mit einem Programmcode, der das Verfahren gemäß Anspruch 32 ausführt, wenn das Computerprogramm auf einem Computer abläuft.

## Revendications

1. Appareil émetteur-récepteur de recouvrement (100) destiné à être utilisé dans un réseau ad hoc présentant des noeuds de recouvrement, qui sont des noeuds dignes de confiance, et présentant des noeuds recouverts, qui sont des noeuds potentiellement indignes de confiance, comprenant
un module récepteur (110) destiné à recevoir un paquet de données (115) présentant une portion de routage (116) et une portion de charge utile (117) comprenant des données de charge utiles recouvertes (118);
un interpréteur de paquet (120) destiné à interpréter le paquet de données reçu (115) pour découvrir les informations relatives à une source de données recouverte (125) dans un noeud recouvert de la portion de routage (116) du paquet de données reçu (115) et relatives aux données de charge utiles recouvertes (118) de la portion de charge utile (117) du paquet de données reçu (115), les données de charge utiles recouvertes (118) présentant des informations relatives à une source de données de recouvrement (126) dans un noeud de recouvrement et relatives à une destination de données de recouvrement (127) dans un noeud de recouvrement et à interpréter les données de charge utiles recouvertes (118) pour découvrir les informations relatives à la source de données de recouvrement (126) et à la destination de données de recouvrement (127);
un module contrôleur (130) destiné à générer un paquet de données de confirmation (135) comprenant des informations relatives à la source de données recouverte (125) dans une portion de routage (116) et une confirmation de recouvrement (136) dans une portion de charge utile (117), et à générer un paquet de données à envoyer (137) avec une portion de routage (116) et une portion de charge utile (117), la portion de routage (116) du paquet de données à envoyer (137) comprenant des informations relatives à l'identité de l'appareil émetteur-récepteur de recouvrement (138) et à une destination de données recouverte (139) dans un noeud recouvert, la portion de charge utile (117) du paquet de données à envoyer (137) comprenant les données de charge utile recouvertes (118), les données de charge utile recouvertes (118) présentant des informations relatives à la source de données de recouvrement (126) et à la destination de données de recouvrement (127); et
un module émetteur (140) destiné à émettre le paquet de données de confirmation (135) et le paquet de données à envoyer (137).

2. Appareil émetteur-récepteur de recouvrement (100) selon la revendication 1, dans lequel l'interpréteur de paquet (120) est adapté de manière à interpréter la portion de routage (116) du paquet de données reçu (115), la portion de routage comprenant des informations relatives à une destination de données recouverte (139) et à une source de données recouverte (125) pour découvrir les informations relatives à la destination de données recouverte (139) et à la source de données recouverte (125).

3. Appareil émetteur-récepteur de recouvrement (100) selon l'une des revendications 1 ou 2, dans lequel l'interpréteur de paquet (120) est adapté de manière à interpréter les données de charge utile recouvertes (118) du paquet de données reçu (115), pour découvrir si le paquet de données reçu (115) est un paquet de réception de réponse de routage de recouvrement (145), le paquet de réception de réponse de routage de recouvrement (145) présentant des informations de réception de réponse de routage de recouvrement (146) dans les données de charge utile recouvertes (118) et, dans l'affirmative, mémoriser les informations de réception de réponse de routage de recouvrement (146).

4. Appareil émetteur-récepteur de recouvrement (100) selon l'une des revendications 1 à 3, dans lequel l'interpréteur de paquet (120) est adapté de manière à interpréter les données de charge utile recouvertes (118) du paquet de données reçu (115), pour découvrir si le paquet de données reçu (115) est un paquet de réception de mise à jour de routage de recouvrement (147), le paquet de réception de mise à jour de routage de recouvrement (147) présentant des informations de réception de mise à jour de routage de recouvrement (148) dans les données de charge utile recouvertes (118) et, dans l'affirmative, mémoriser les informations de réception de mise à jour de routage de recouvrement (148).

5. Appareil émetteur-récepteur de recouvrement (100) selon l'une des revendications 1 à 4, dans lequel le module contrôleur (130) est adapté de manière à générer un paquet d'émission de réponse de routage de recouvrement (150), le paquet d'émission de réponse de routage de recouvrement (150) comprenant des informations relatives à l'identité de l'appareil émetteur-récepteur de recouvrement (138) et une information d'émission de réponse de routage de recouvrement (151) dans les données de charge utile recouvertes (118); et dans lequel le module émetteur (140) est adapté de manière à émettre le paquet d'émission de réponse de routage de recouvrement (150).

6. Appareil émetteur-récepteur de recouvrement (100) selon l'une des revendications 1 à 5, dans lequel le module contrôleur (130) est adapté de manière à générer un paquet d'émission de mise à jour de routage de recouvrement (155), le paquet d'émission de mise à jour de routage de recouvrement (155) comprenant des informations relatives à l'identité de l'appareil émetteur-récepteur de recouvrement (138) et une information d'émission de mise à jour de routage de recouvrement (156) dans les données de charge utile recouvertes (118); et dans lequel le module émetteur (140) est adapté de manière à émettre le paquet d'émission de mise à jour de routage de recouvrement (155).

7. Appareil émetteur-récepteur de recouvrement (100) selon l'une des revendications 1 à 6, dans lequel le module récepteur (110) est adapté de manière à recevoir un paquet de sollicitation de route (160), le paquet de sollicitation de route (160) comprenant des informations relatives à une identité d'appareil émetteur-récepteur recouvert (161) et un indicateur de sollicitation de route (162); et dans lequel l'interpréteur de paquet (120) est adapté de manière à interpréter le paquet de sollicitation de route (160), pour découvrir les informations relatives à l'identité de l'appareil émetteur-récepteur recouvert (161).

8. Appareil émetteur-récepteur de recouvrement (100) selon l'une des revendications 1 à 7, dans lequel le module contrôleur (130) est adapté de manière à générer un paquet de sollicitation de route recouvert (160), le paquet de sollicitation de route recouvert (160) comprenant des informations relatives à une identité d'appareil émetteur-récepteur recouvert (161) et à une identité de sollicitation de route (162); et dans lequel le module émetteur (140) est adapté de manière à émettre le paquet de sollicitation de route recouvert (160).

9. Appareil émetteur-récepteur de recouvrement (100) selon la revendication 8, dans lequel le module contrôleur (130) est adapté de manière à générer un paquet de sollicitation de route recouvert (160) sur une base de temps fréquente, la base de temps étant préréglée ou configurée ou déclenchée par un événement.

10. Appareil émetteur-récepteur de recouvrement (100) selon l'une des 1 à 9, dans lequel l'interpréteur de paquet (120) est adapté de manière à déclencher le module contrôleur (130) pour générer un paquet d'émission de réponse de routage de recouvrement (150), et le module émetteur (140) est adapté de manière à émettre le paquet de réponse de route de recouvrement (150) après que le module récepteur (110) ait reçu un paquet de sollicitation de route recouvert (160) et que l'interpréteur de paquet (120) ait découvert des informations relatives à une identité d'appareil émetteur-récepteur recouvert particulière (161).

11. Appareil émetteur-récepteur de recouvrement (100) selon la revendication 10, dans lequel l'identité d'appareil émetteur-récepteur recouvert particulière (161) n'est pas consacrée à un appareil émetteur-récepteur de recouvrement quelconque (100), ni à un appareil émetteur-récepteur recouvert.

12. Appareil émetteur-récepteur de recouvrement (100) selon l'une des revendications 10 ou 11, dans lequel l'interpréteur de paquet (120) est adapté de manière à mémoriser la source de données recouverte du paquet de réponse de route recouvert (160) dans une liste de voisins rapprochés de recouvrement si l'interpréteur de paquet (120) a trouvé l'identité d'appareil émetteur-récepteur recouvert particulière (161).

13. Appareil émetteur-récepteur de recouvrement (100) selon l'une des revendications 10 à 12, dans lequel l'interpréteur de paquet (120) est adapté de manière à interpréter un paquet de réception de réponse de route de recouvrement (145), le paquet de réception de réponse de route de recouvrement (145) comprenant des informations de réception de réponse de route de recouvrement (146) comprenant une source de réponse de route de recouvrement ou une identité d'appareil émetteur-récepteur de recouvrement, l'interpréteur de paquet étant adapté de manière à mémoriser l'identité d'appareil émetteur-récepteur de recouvrement de source de réponse de route de recouvrement dans une liste de voisins rapprochés de recouvrement.

14. Appareil émetteur-récepteur de recouvrement (100) selon l'une des revendications 12 ou 13, dans lequel le module contrôleur (130) est adapté de manière à générer un paquet d'émission de mise à jour de routage de recouvrement (155), et le module émetteur-récepteur (140) est adapté de manière à émettre le paquet d'émission de mise à jour de routage de recouvrement (155) sur une échelle de temps préréglée ou préconfigurée ou déclenchée par un événement, les informations de mise à jour de routage de recouvrement (156) comprenant des informations relatives à la liste de voisins rapprochés de recouvrement.

15. Appareil émetteur-récepteur de recouvrement (100) selon la revendication 14, dans lequel l'interpréteur de paquet (120) est adapté de manière à interpréter les informations relatives à une autre liste de voisins rapprochés de l'appareil émetteur-récepteur de recouvrement et à la mémoriser dans un tableau de routage.

16. Appareil émetteur-récepteur de recouvrement (100) selon l'une des revendications 14 ou 15, dans lequel les informations de mise à jour de routage de recouvrement (156) comprennent des listes de voisins rapprochés reçues d'autres appareils émetteurs-récepteurs de recouvrement.

17. Appareil émetteur-récepteur de recouvrement (100) selon la revendication 16, dans lequel l'interpréteur de paquet (120) est adapté de manière à interpréter les informations relatives à toutes les listes de voisins rapprochés de l'appareil émetteur-récepteur de recouvrement reçues et à les mémoriser dans un tableau de routage.

18. Appareil émetteur-récepteur de recouvrement (100) selon la revendication 17, dans lequel le module contrôleur (130) est adapté de manière à dériver une topologie de recouvrement du tableau de routage.

19. Appareil émetteur-récepteur de recouvrement (100) selon l'une des revendications 12 à 18, dans lequel le module contrôleur (130) est adapté de manière à générer le paquet de données à envoyer (137), comprenant la destination de données recouverte (139) dérivée de la liste de voisins rapprochés sur base de la destination de données de recouvrement (127).

20. Appareil émetteur-récepteur de recouvrement (100) selon l'une des revendications 15 à 19, dans lequel le module contrôleur (130) est adapté de manière à générer le paquet de données à envoyer (137), comprenant la destination de données recouverte (139) dérivée du tableau de routage sur base de la destination de données de recouvrement (127).

21. Appareil émetteur-récepteur de recouvrement (100) selon l'une des revendications 19 ou 20, dans lequel la destination de données recouverte (139) est dérivée selon un critère d'optimisation.

22. Appareil émetteur-récepteur de recouvrement (100) selon la revendication 21, dans lequel le critère d'optimisation est au moins l'une parmi une combinaison d'un trajet le plus court, un nombre le plus réduit de sauts recouverts, une temporisation la plus faible, ou une moindre consommation de ressources.

23. Appareil émetteur-récepteur de recouvrement (100) selon l'une des revendications 1 à 22, dans lequel le module contrôleur (130) établit une minuterie lors de la transmission d'un paquet de données à envoyer (137) et mémoriser le paquet de données à envoyer, et arrête la minuterie lorsqu'un paquet de données de confirmation (135) est reçu.

24. Appareil émetteur-récepteur de recouvrement (100) selon l'une des revendications 1 à 23, dans lequel le paquet de données de confirmation (135) a une référence à un paquet de données à envoyer (137).

25. Appareil émetteur-récepteur de recouvrement (100) selon l'une des revendications 23 ou 24, dans lequel le module contrôleur (130) est adapté de manière à déclencher une retransmission d'un paquet de données à envoyer (137) mémorisé après que soit expiré le temps de la minuterie.

26. Appareil émetteur-récepteur de recouvrement (100) selon la revendication 25, dans lequel le module contrôleur (130) est adapté de manière à marquer ou effacer une identité d'appareil émetteur-récepteur de recouvrement (138) de la liste de voisins s'il n'est pas reçu de paquet de confirmation (135) et qu'il n'est pas rapporté d'erreurs recouvertes pour un paquet de données à envoyer (137) transmis après que soit expiré le temps de la minuterie ou que soit atteint un nombre maximum de retransmissions, et qu'il n'y a pas de trajet alternatif vers l'appareil émetteur-récepteur de recouvrement dans le tableau de routage.

27. Appareil émetteur-récepteur de recouvrement (100) selon l'une des revendications 25 ou 26, dans lequel le module contrôleur (130) est adapté de manière à dériver un trajet alternatif vers la destination de données de recouvrement (127) si le temps de la minuterie est expiré ou qu'un nombre maximum de retransmissions a été atteint pour le paquet de données à envoyer (137), en vérifiant le tableau de routage pour un trajet alternatif vers la destination de données de recouvrement (127) et qu'il n'est pas disponible en déclenchant la transmission d'un paquet de sollicitation de routage recouvert (160) pour découvrir un trajet vers la destination de données de recouvrement (127).

28. Appareil émetteur-récepteur de recouvrement (100) selon l'une des revendications 25 à 27, dans lequel le module contrôleur (130) est adapté de manière à générer un paquet d'émission de mise à jour de routage de recouvrement (147) comportant des informations relatives à l'appareil émetteur-récepteur de recouvrement ou le fait que le segment de topologie de recouvrement n'a pas envoyé de paquet de données de confirmation (135) lorsque le temps de la minuterie est expiré ou qu'un nombre maximum de retransmissions a été atteint.

29. Appareil émetteur-récepteur de recouvrement (100) selon l'une des revendications 15 à 28, dans lequel l'interpréteur de paquet (120) est adapté de manière à interpréter ou le module contrôleur (130) est adapté de manière à générer une topologie de recouvrement comprenant des routes alternatives vers différents appareils émetteurs-récepteurs de recouvrement.

30. Appareil émetteur-récepteur de recouvrement (100) selon l'une des revendications 1 à 29, dans lequel le module contrôleur (130) est adapté de manière à générer un identificateur pour chaque paquet comprenant des informations de recouvrement.

31. Appareil émetteur-récepteur de recouvrement (100) selon la revendication 30, dans lequel l'interpréteur de paquet (120) est adapté de manière à n'interpréter que les paquets comprenant l'identificateur.

32. Procédé d'émission-réception destiné à être utilisé dans un réseau ad hoc présentant des noeuds de recouvrement, qui sont des noeuds dignes de confiance, et présentant des noeuds recouverts, qui sont des noeuds potentiellement indignes de confiance, comprenant les étapes consistant à
recevoir un paquet de données (115) présentant une portion de routage (116) et une portion de charge utile (117) comprenant des données de charge utiles recouvertes (118);
interpréter le paquet de données reçu (115) pour découvrir les informations relatives à une source de données recouverte (125) dans un noeud recouvert de la portion de routage (116) du paquet de données reçu (115) et relatives aux données de charge utiles recouvertes (118) de la portion de charge utile (117) du paquet de données reçu (115), les données de charge utiles recouvertes (118) présentant des informations relatives à une source de données de recouvrement (126) dans un noeud de recouvrement et relatives à une destination de données de recouvrement (127) dans un noeud de recouvrement;
et interpréter les données de charge utiles recouvertes (118) pour découvrir les informations relatives à la source de données de recouvrement (126) et à la destination de données de recouvrement (127);
générer un paquet de données de confirmation (135) comprenant des informations relatives à la source de données recouverte (125) dans une portion de routage (116) et une confirmation de recouvrement (136) dans une portion de charge utile (117), et générer un paquet de données à envoyer (137) avec une portion de routage (116) et une portion de charge utile (117), la portion de routage (116) du paquet de données à envoyer (137) comprenant des informations relatives à l'identité de l'appareil émetteur-récepteur de recouvrement (138) et à une destination de données recouverte (139) dans un noeud recouvert, la portion de charge utile (117) du paquet de données à envoyer (137) comprenant les données de charge utile recouvertes (118), les données de charge utile recouvertes (118) présentant des informations relatives à la source de données de recouvrement (126) et à la destination de données de recouvrement (127); et
émettre le paquet de données de confirmation (135) et le paquet de données à envoyer (137).

33. Programme d'ordinateur avec un code de programme réalisant le procédé de la revendication 32 lorsque le programme d'ordinateur est exécuté sur un ordinateur.
